# EUROPEAN PATENT SPECIFICATION

(11) **EP 3 786 602 B1**
(45) Date of publication and mention of the grant of the patent: **06.09.2023**
(21) Application number: 19834424.4
(22) Date of filing: 11.07.2019
(51) Int. Cl.: G01L 5/00, F16C 19/52, F16C 23/06, F16C 41/00, F16C 33/66, F16C 19/26, F16C 19/54, F16C 25/06, F16C 35/12

(54) **BEARING DEVICE AND MACHINE TOOL SPINDLE APPARATUS**
LAGERVORRICHTUNG UND WERKZEUGMASCHINENSPINDELEINRICHTUNG
DISPOSITIF DE PALIERS ET APPAREIL À BROCHE DE MACHINE-OUTIL

(30) Priority: 11.07.2018 JP 2018131256; 13.03.2019 WO PCT/JP2019/010373
(43) Date of publication of application: 03.03.2021
(73) Proprietor: NSK LTD., Shinagawa-Ku Tokyo 141-8560 (JP)
(72) Inventor: KENMOCHI, Kenta, Fujisawa-shi, Kanagawa 2518501 (JP); KATSUNO, Yoshiaki, Fujisawa-shi, Kanagawa 2518501 (JP)
(74) Representative: Global IP Europe Patentanwaltskanzlei
(86) International application number: PCT/JP2019/027503
(87) International publication number: WO 2020/013276

(56) References cited:
- DE-A1- 2 352 788
- JP-A- 2000 110 836
- JP-A- 2002 061 750
- JP-A- 2008 082 425
- JP-A- 2009 061 571
- JP-A- 2010 217 167
- JP-A- 2010 217 167
- JP-A- 2015 087 179
- JP-A- 2015 087 179
- JP-A- 2016 169 946
- KR-A- 20070 041 194
- US-A1- 2002 102 040

## Description

### TECHNICAL FIELD

The present invention relates to a bearing device and a spindle apparatus of a machine tool, and more particularly, to a bearing device that can detect a displacement of a rotary shaft supported by rolling bearings and measure a shaft load, and a machine tool spindle apparatus that can detect the displacement of the rotary shaft supported by the rolling bearings and measure the shaft load.

### BACKGROUND ART

In a field of a spindle of a machine tool, there is an increasing trend that a cutting load should be controlled to achieve faster machining, higher accuracy of the machining, and longer life of bearings. One of the solutions is measuring the shaft load during operation of the machine tool, and the need for such solution is increasing.

Techniques for measuring the shaft load during operation of such machine tools have been numerously proposed. Among them, a technique for measuring an amount of shaft displacement, and multiplying the shaft displacement by a rigidity value of the bearing or the like to calculate the shaft load, rather than directly measuring the shaft load, as described in Patent Literature Document 1 (Japanese Patent Application Laid-Open Publication No. 2010-217167), has drawn attention.

In addition to the above-mentioned prior art, there are a plurality of displacement sensors of the non-contact type applicable to the measurement of displacement of the rotating body, such as a laser displacement sensor, an eddy current displacement sensor, and a capacitive displacement sensor.

Further, Patent Literature Document 2 (Japanese Patent No. 3662741) teaches a technique to measure the rotor displacement of the hydrostatic magnetic composite bearing, which can support the shaft with a magnetic bearing and a hydrostatic gas bearing, and control the current supplied to the coil of the magnetic bearing. The measurement of the rotor displacement is carried out in the following manner: the difference in the static pressure between opposite faces of the hydrostatic gas bearing in a diametral direction of the hydrostatic gas bearing is measured by a pressure sensor, and the displacement of the rotor is obtained from this measured value.

DE 23 52 788 A1 discloses a bearing device that comprises two rolling bearings to support a rotary member relative to a fixed member, the two rolling bearings being spaced from each other in an axial direction of the rotary member.

JP 2015 087179 A discloses an air micrometer configured to measure a dimension of a gap between a measurement head and a work by using compressed air supplied into the gap.

### PRIOR ART DOCUMENTS

### PATENT LITERATURE DOCUMENTS

Patent Literature Document 1: Japanese Patent Application Laid-Open Publication No. 2010-217167
Patent Literature Document 2: Japanese Patent No. 3662741

### SUMMARY OF THE INVENTION

### PROBLEMS TO BE SOLVED BY THE INVENTION

However, when the prior art arrangement described in Patent Literature Document 1 measures the displacement of the rotary shaft with a non-contact type sensor, the non-contact type sensor is arranged in the vicinity of the measurement target. Also, the circuits connected to the sensor and the wiring of the sensor need to be arranged in the vicinity of the measuring target. This entails many problems, such as the complexity of the internal structure of the machine tool and damages due to adhesion of chips and cutting water during machining.

Also, the spindle of the machine tool is the part which requires the high rigidity against the cutting load. Further, since the shaft displacement due to cutting load is about several µm, the shaft displacement measurement requires high accuracy and high resolution. This increases the cost.

In contrast, the prior art arrangement described in Patent Literature Document 2 can place the pressure sensor on the outer peripheral side of the stator, and therefore it is possible to solve the problems of the prior art arrangement described in Patent Literature Document 1. However, if the rotary member such as a rotor or a rotary shaft is supported by the rolling bearings, the prior art arrangement of Patent Literature Document 2 cannot be applied.

Therefore, the present invention has been made in view of the problems of the above-described prior art arrangements. An object of the present invention is to provide a bearing device and a spindle apparatus of a machine tool, which can measure the displacement of the rotary member in the radial direction of the rotary member precisely and contactless, without placing the measuring unit in the vicinity of the rotary member, when supporting the rotary member by rolling bearings.

### SOLUTION TO THE PROBLEMS

The object above is achieved by each of the bearing device defined by the appended claim 1 and the machine tool spindle apparatus defined by the appended claim 24. Further advantageous effects can be obtained by the preferred embodiments defined by appended dependent claims.

A reference example of a bearing device, which is not a part of the present invention, supports a rotary member relative to a stationary member (fixed member) via rolling bearings, and includes a displacement measuring unit for supplying compressed gas to a gap-to-be-measured between the rotary member and the stationary member in the vicinity of one of the rolling bearings, and measuring a radial direction displacement of the rotary member. A gas recovery groove for recovering the compressed gas is provided on one side or both sides of a nozzle configured to inject the compressed gas.

A reference example of a spindle apparatus of a machine tool, which is not a part of the present invention, includes a bearing device having the above-described configuration, and the bearing device rotatably supports a main shaft (spindle) as the rotary member, and the spindle apparatus measures the load exerted onto the main shaft.

### ADVANTAGES OF THE INVENTION

According to the bearing device according to the appended claim 1, in a configuration that supports the rotary member by the rolling bearings, it is possible to measure the radial direction displacement of the rotary member by utilizing the compressed gas. It is therefore possible to measure the radial direction displacement of the rotary member with a simple configuration and high accuracy.

In the spindle apparatus of the machine tool according to the appended claim 24, the main shaft (spindle) is rotatably supported by using the bearing device. Thus, the spindle apparatus can determine the load acting on the main shaft by measuring the radial direction displacement of the main shaft during cutting.

### BRIEF DESCRIPTION OF THE DRAWINGS

FIG. 1 is a cross-sectional view showing a first embodiment of a spindle apparatus of a machine tool according to the present invention.
FIG. 2 is a set of diagrams showing a bearing device of FIG. 1. Specifically, FIG. 2(a) is an enlarged cross-sectional view of the bearing device in the axial direction, and FIG. 2(b) is an enlarged cross-sectional view in a direction perpendicular to the axial direction.
FIG. 3 is a set of diagrams showing a second embodiment of the bearing device. Specifically, FIG. 3(a) is an enlarged cross-sectional view of the bearing device in the axial direction, and FIG. 3(b) is an enlarged cross-sectional view in the direction perpendicular to the axial direction.
FIG. 4 is an enlarged cross-sectional view of a bearing device in the axial direction and shows a first modification to the second embodiment of the bearing device.
FIG. 5 is a set of diagrams showing a second modification to the second embodiment of the bearing device. Specifically, FIG. 5(a) is a cross-sectional view of the bearing device in a direction perpendicular to the axial direction, and FIG. 5(b) shows a drain hole.
FIG. 6 is an enlarged cross-sectional view of a bearing device in the axial direction showing a third modification to the second embodiment of the present invention.
FIG. 7 is a set of views showing a third embodiment of the present invention. Specifically, FIG. 7(a) is a cross-sectional view when a shallow recess is formed around an injecting portion, FIG. 7(b) is a cross-sectional view when a conical surface is formed around the injecting portion, and FIG. 7(c) is a cross-sectional view when a deep recess is formed around the injecting portion.
FIG. 8 is an enlarged cross-sectional view in the axial direction showing a fourth embodiment of the present invention.
FIG. 9 is an enlarged cross-sectional view in the axial direction showing a first modification to the fourth embodiment of the present invention.
FIG. 10 is an enlarged cross-sectional view in the axial direction showing a second modification to the fourth embodiment of the present invention.
FIG. 11 is an enlarged cross-sectional view in the axial direction showing a modification to the first to fourth embodiments of the present invention.
FIG. 12 is an enlarged cross-sectional view in the axial direction showing a fifth embodiment of the present invention.
FIG. 13 is a system diagram showing a sixth embodiment of the present invention.
FIG. 14 is a system diagram showing a modification to the sixth embodiment of the present invention.
FIG. 15 is a system diagram showing a seventh embodiment of the present invention.
FIG. 16 is an enlarged cross-sectional view in the axial direction showing an eighth embodiment of the present invention.
FIG. 17 is an enlarged cross-sectional view in the axial direction showing a modification to the eighth embodiment.
FIG. 18 is an enlarged cross-sectional view in the axial direction showing a ninth embodiment of the present invention.
FIG. 19 is an enlarged cross-sectional view in the axial direction showing a modification to the ninth embodiment.
FIG. 20 is an air supply system diagram showing a modification to the first to ninth embodiments of the present invention.
FIG. 21 is a cross-sectional view showing a rotary table of a machine tool, in which the bearing device according to the present invention is used.

### DETAILED DESCRIPTION OF THE EMBODIMENTS

Referring now to the drawings, embodiments of the present invention will be described. In the following description of the drawings, the same or similar components, elements and portions are denoted by the same or similar reference numerals. It should be noted that the drawings are schematic, and the relationship between the thickness and the top-view dimensions, the ratio of the thickness of layers, etc. may be different from the actual ones. Therefore, the specific thickness and dimensions should be determined in consideration of the following description. Moreover, it is needless to say that the drawings also include portions having different dimensional relationships and ratios from each other.

The embodiments described below are intended to exemplify a device, an apparatus and a method for embodying the technical concept of the present invention. The technical concept of the present invention is not limited to the material, shape, structure, arrangement, etc. of components, elements and portions described in the following description. The technical concept of the present invention encompasses various changes within the technical scope defined by the claims.

### First Embodiment

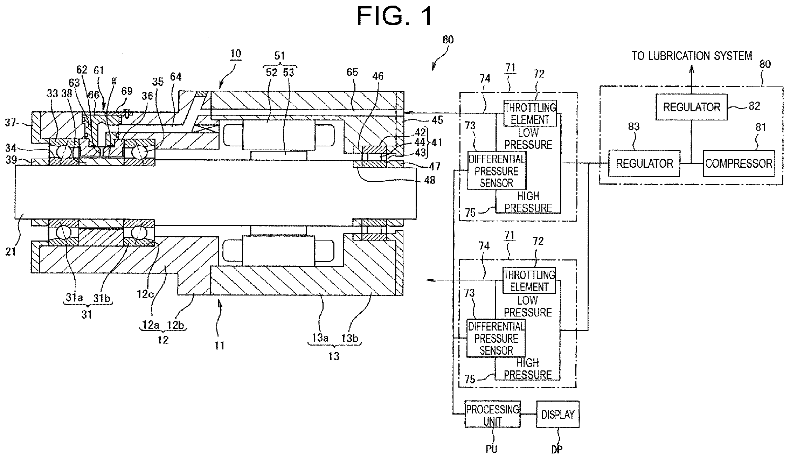

First, a first embodiment of the spindle device of the machine tool according to the present invention will be described with reference to FIG. 1, FIG. 2 and FIG. 3.

The spindle apparatus 10 of the machine tool is a motor built-in type. A hollow rotating shaft (spindle shaft) 21, which is a rotary member, is rotatably supported in a housing 11, which is a stationary member or a fixed member, by a front rolling bearing set 31 and a rear rolling bearing 41. The rotating shaft 21 is caused to rotate by a drive motor 51 disposed between the front rolling bearing set 31 and the rear rolling bearing 41.

The housing 11 includes a front cylindrical portion 12 and a rear cylindrical portion 13. The housing 11 is divided into these two cylindrical portions at a particular position between the front rolling bearing set 31 and the drive motor 51.

The front cylindrical portion 12 includes a small outer diameter portion 12a, which defines a front portion, and a large outer diameter portion 12b, which defines a rear portion and has a larger outer diameter than the small outer diameter portion 12a. The inner diameter of an inner peripheral surface of the small outer diameter portion 12a is equal to the inner diameter of an inner peripheral surface of the large outer diameter portion 12b, but a bearing-receiving stepped-portion 12c for receiving the front rolling bearing set 31 is formed from the front end toward the rear end of the small outer diameter portion 12a.

On the other hand, the rear cylindrical portion 13 includes a large inner diameter portion 13a, which has a large inner diameter, and a small inner diameter portion 13b, which has a smaller inner diameter than the large inner diameter portion 13a.

The front rolling bearing set 31 includes a pair of angular contact ball bearings 31a and 31b, which have substantially the same dimensions and arranged such that the back of the bearing 31a faces the back of the bearing 31b. Each of the angular contact ball bearings 31a and 31b has an outer ring 33 which is a stationary-side race ring, an inner ring 34 which is a rotary-side race ring, and a plurality of balls 35 which serve as rolling elements disposed with a contact angle between the outer ring race groove which is a stationary-side race and the inner ring race groove which is a rotary-side race. In short, each of the bearings 31a and 31b has the inner ring 34, the outer ring 33, and the balls (rolling elements) which are rotatably disposed between the inner ring 34 and the outer ring 33. It should be noted that each of the bearings 31a and 31b may be provided with a holding component for holding the rolling elements.

The angular contact ball bearings 31a and 31b are arranged such that the outer rings 33 of the ball bearings are fitted in the bearing receiving step portion 12c formed in the front cylindrical portion 12 of the housing 11 respectively, with an outer ring spacer 36 being interposed between the outer rings 33, and such that the outer rings are fixed by a front bearing outer ring retainer 37 which is bolted to the front cylindrical portion 12 of the housing 11.

Further, the inner rings 34 of the angular contact ball bearings 31a and 31b are fitted over the rotary shaft 21 respectively, with an inner ring spacer 38 being interposed between the inner rings 34, and the inner rings 34 are fixed to the rotary shaft 21 by a nut 39 which is fastened to the rotary shaft 21. A predetermined position preload is applied to the angular contact ball bearings 31a and 31b by the nut 39. Therefore, the axial position of the rotary shaft 21 is decided by the front rolling bearing set 31.

The rear rolling bearing 41 is a cylindrical roller bearing, and has an outer ring 42, an inner ring 43, and a plurality of cylindrical rollers 44 as rolling elements. The outer ring 42 of the rear rolling bearing 41 is fitted into the small inner diameter portion 13b of the rear cylindrical portion 13 of the housing 11, and is fixed to the small inner diameter portion 13b by a rear bearing retainer 45 which is bolted to the small inner diameter portion 13b, with an outer ring spacer 46 being interposed between the outer ring and the small inner diameter portion. The inner ring 43 of the rear rolling bearing 41 is fixed to the rotary shaft 21 via an inner ring spacer 48 by another nut 47 which is fastened to the rotary shaft 21.

The drive motor 51 includes a stator 52 which is fitted into the large inner diameter portion 13a of the rear cylindrical portion 13 of the housing 11, and a rotor 53 which is fitted over the rotary shaft 21 and faces the inner periphery of the stator 52 through a gap.

The spindle apparatus 10 of the machine tool having the above-described configuration includes a displacement measuring unit (load measuring unit) 60 for measuring an amount of load applied to the rotary shaft 21. The displacement measuring unit 60 includes a displacement detecting unit 61 for detecting the radial direction displacement of the rotary shaft 21 (displacement of the rotary shaft in the radial direction) by utilizing compressed gas, and a pressure loss measuring unit 71 for supplying the compressed gas to the displacement detecting unit 61 and measuring the pressure loss corresponding to a gap between the outer ring spacer 36 and the inner ring spacer 38. One displacement detecting unit and one pressure loss measuring unit make a pair. A plurality of pairs of displacement detecting unit 61 and the pressure loss measuring unit 71 are arranged in the circumferential direction (two pairs in this embodiment). Further, the displacement measuring unit 60 includes an arithmetic processing unit PU for calculating the load exerted on the rotary shaft 21 based on the measurement results of the pressure loss measuring units 71. The displacement measuring unit 60 can be arranged at any position in the axial direction of the rotary shaft 21. More preferably, it is desirable that the displacement measuring unit 60 may be disposed near the back of the forwardmost bearing because an amount of displacement of the shaft with respect to the load is large and the shaft elongation due to the installation of the displacement measuring unit is small if the displacement measuring unit is disposed behind the forwardmost bearing.

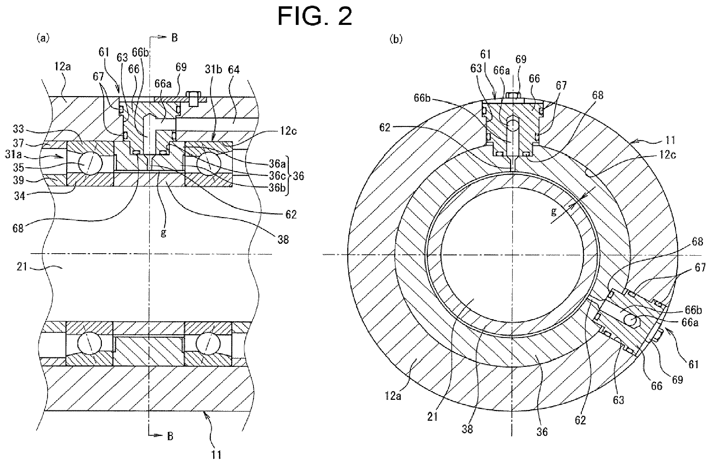

As shown in FIG. 2(a) and FIG. 2(b), the displacement detecting units 61 are arranged at those positions in the circumferential direction which at least avoid facing each other over the center axis in the small outer diameter portion 12a of the front cylindrical portion 12 of the housing 11, e.g., the displacement detecting units are formed at two locations with a distance of 120 degrees in the circumferential direction.

Each of the displacement detecting units 61 is configured to include the outer ring spacer 36 and the inner ring spacer 38 of the front rolling bearing 31. Specifically, the outer ring spacer 36 includes outer peripheral ring portions 36a and inner peripheral ring portions 36b having a narrower width than the outer peripheral ring portions 36a. One of the outer peripheral ring portions 36a is in contact with an axial end face of the outer ring 33 of the angular contact ball bearing 31a and the other outer peripheral ring portion 36a is in contact with an axial end face of the outer ring 33 of the angular contact ball bearing 31b.

The outer peripheral ring portion 36a has a recess 36c, which extends inwardly from the outer surface in the central portion of the outer peripheral ring portion 36a. The center portion is present in a center area when viewed in the axial direction. The inner peripheral ring portion 36b faces the outer peripheral surface of the inner ring spacer 38 such that the inner peripheral surface of the ring portion 36b forms a "gap to be measured" **g** on the outer peripheral surface of the inner ring spacer 38.

A funnel-shaped compressed gas injection nozzle 62 is formed such that the nozzle 62 extends radially from the bottom of the recess 36c of the outer peripheral ring portion 36a to the inner peripheral surface of the outer peripheral ring portion 36a. Compressed gas from the compressed gas injection nozzle 62 is injected into the measurement target gap or the gap to be measured **g** between the outer ring spacer 36 and the inner ring spacer 38.

The spindle shaft of the machine tool is, in many cases, a hollow shaft in order to provide a draw bar in the shaft inner diameter portion as a mechanism for gripping or holding a tool. It is also expected that the spindle shaft of the machine tool rotates at a high speed to improve the machining efficiency. Therefore, in particular, when the machine tool is used at a high speed, the rotating members such as the rotary shaft 21 and the inner ring spacer 38 expand several to several-tens micrometers due to a centrifugal force. Furthermore, during the spindle rotation, a temperature difference occurs between the housing 11 and the rotary shaft 21. Since the temperature of the rotary shaft 21 becomes higher than the housing 11 in many cases, a gap between the housing 11 and the rotary shaft 21 is reduced by several to several-tens micrometers.

Further, in the machine tool spindle, the gap formed between the housing 11 and the rotary shaft 21, such as between the outer ring spacer 36 and the inner ring spacer 38, is set to about a few tenths of 1mm at most in order to prevent the penetration of foreign matter into the spindle interior and the rolling bearings 31.

Therefore, the gap to be measured **g** between the outer ring spacer 36 and the inner ring spacer 38 is set to 0.05mm - 0.5mm when the rotary shaft 21 is at rest. An amount of change in the pressure loss in response to the radial displacement of the rotary shaft 21 becomes larger as the gap becomes smaller. Thus, the measurement target gap **g** is preferably set to 0.05mm - 0.2mm.

In order to accurately (precisely) measure the gap to be measured **g** between the outer ring spacer 36 and the inner ring spacer 38 during operation, it is desired that the inner ring spacer 38 provided in the displacement detecting unit 61 becomes coaxial with the rotary shaft 21 as much as possible. Therefore, it is desirable that the inner ring spacer 38 is fitted over the rotary shaft by intermediate fitting or interference fitting (press fitting).

A circular opening 63 is formed in the small outer diameter portion 12a of the housing 11. The circular opening 63 extends from the outer peripheral surface of the small outer diameter portion12a and reaches the recess 36c of the outer ring spacer 36. The circular opening 63 is coaxial with the compressed gas injection nozzle 62. The inner diameter of the circular opening 63 is reduced in two stages. As shown in FIG. 1, one end of the compressed gas supply passage 64 formed in the front cylindrical portion 12 is open in the rear side wall of the opening 63. The other end of the compressed gas supply passage 64, as shown in FIG. 1, is in communication with a compressed gas supply passage 65 which is formed in the rear cylindrical portion 13 and extends forward axially from its rear end opening.

Further, as shown in FIG. 2(a) and FIG. 2(b), the gas connecting portion 66 is disposed in the opening 63. The gas connecting portion 66 serves as a gas direction converting unit to supply the compressed gas supplied from the compressed gas supply passage 64 to the compressed gas injection nozzle 62 by converting the direction of the compressed gas from the axial direction to the radial direction. The gas connecting portion 66 has a shape that can be fitted into the opening 63, e.g., an outer peripheral shape of the gas connecting portion 66 is the same as the inner peripheral shape of the opening 63. The gas connecting portion 66 has a gas passage 66a and another gas passage 66b therein. The gas passage 66a communicates with the opening 63. One end of the gas passage 66b communicates with the gas passage 66a, and the other end communicates with the compressed gas injection nozzle 62. An O-ring 67 is disposed between the side wall of the gas connecting portion 66 and the inner wall of the opening 63. Similarly, an O-ring 68 is disposed between the bottom surface of the gas connecting portion 66 and the bottom surface of the recess 36c. These O-rings 67 and 68 prevent leakage of the compressed air.

Further, as shown in FIG. 2(a) and FIG. 2(b), the stepped portion of the outer peripheral surface of the gas connecting portion 66 is in contact with the stepped portion of the inner peripheral surface of the opening 63. Thus, the gas connecting portion 66 is positioned in the radial direction. The radially outer end face of the gas connecting portion 66 is in contact with a pressing piece or a holding element 69 screwed to the outer peripheral surface of the small outer diameter portion 12a such that the disengaging of the gas connecting portion 66 from the opening 63 is prevented. It should be noted that how to prevent the disengagement of the gas connecting portion 66 is not limited to use of the holding piece 69. For example, a flange portion may be formed on the outer peripheral surface of the gas connecting portion 66, and the flange portion may be screwed. Thus, the fixing method for fixing the gas connecting portion 66 to the housing 11 can be any fixing method.

It should be noted that the arrangement of the displacement detecting units 61 is not limited to arranging the displacement detecting units 61 in two locations of the housing 11 along the circumferential direction of the housing. For example, the displacement detecting units 61 may be provided in three or more locations of the housing along the circumferential direction of the housing as long as they do not face each other over the center axis of the housing. Because the compressed gas is injected into the gap between the outer ring spacer 36 and the inner ring spacer 38 from the compressed gas injection nozzle 62, it is preferred that three or more displacement detecting units 61 may be arranged at equal angular intervals in order to cancel a load on the rotating shaft 21, which is generated by the compressed gas.

As shown in FIG. 1, the compressed gas is supplied to a lubrication system (lubrication line) of the pressure loss measuring unit 71 from the compressed gas supply unit 80 to carry out oil-air lubrication or oil-mist lubrication (not shown) for supplying a lubrication oil to the front rolling bearing set 31 and the rear rolling bearing 41. The compressed gas supply unit 80 includes a compressor 81 for generating the compressed gas, a regulator 82 provided for the lubricant system for regulating the pressure of the compressed gas supplied from the compressor 81, and another regulator 83 connected in parallel with the regulator 82 and used for pressure loss measurement. It should be noted that the first embodiment is not limited to the oil-air lubrication or the oil-mist lubrication. For example, the lubrication may be carried oud with greases or the like in the first embodiment. Lubricants (lubrication oil) and greases are examples of lubrication material or lubricant. The lubrication system is a lubricant supply unit that supplies the lubricant to the bearings 31 and 41.

The pressure loss measuring unit 71 includes a restrictor or a throttling element 72 disposed in the supply path of the compressed gas, and a differential pressure sensor 73 for detecting the differential pressure across the throttling element (differential pressure between the upstream and downstream sides of the throttling element).

The throttling element 72 is disposed in a pipe 74 that connects the regulator 83 to the opening of the compressed gas supply passage 65 formed in the housing 11. A restricting amount (degree of throttling) of the throttling element 72 is decided such that the differential pressure detection value detected by the differential pressure sensor 73 when the radial direction displacement of the rotary shaft 21 during rotation of the rotary shaft 21 is "0" becomes a preset value. Thus, the pressure on the downstream side of the throttling element 72 represents a pressure loss corresponding only to the radial direction displacement of the rotary shaft 21 in consideration of the flow path resistance by the pipe diameter and the pipe length from the throttling element 72 to the displacement detecting unit 61.

The low-pressure side of the differential pressure sensor 73 is connected to the pipe 74 on the downstream side of the throttling element 72, and the high-pressure side of the differential pressure sensor 73 is connected to the regulator 83 through the pipe 75. The differential pressure sensor 73 detects the differential pressure between the pressure of the compressed air supplied from the regulator 83 and the downstream pressure of the throttling element 72 connected to the displacement detecting unit 61, i.e., the pressure loss corresponding to the displacement of the rotary shaft 21 at the displacement detecting unit 61. The differential pressure sensor 73 then issues (generates) the detected differential pressure value in the form of an analog value or a digital value.

The arithmetic processing unit PU is constituted by, for example, an arithmetic processing device such as a microcomputer. The processing unit PU receives the differential pressure detection value from the differential pressure sensor 73 of each of the pressure loss measuring units 71, and calculates a displacement in the radial direction of the rotation shaft 21 based on the differential pressure detection value by converting the differential pressure detection value to the displacement. Further, the arithmetic processing unit PU multiplies the displacement of the rotation shaft 2 in the radial direction by the axial stiffness value (shaft stiffness value) of the compressed gas injection nozzle 62 in the axial position, which is calculated in advance, to obtain a load exerted on the rotary shaft 21, and sends the calculated load to the display DP such that the display shows the load. Here, the shaft stiffness value is calculated (prepared) based on, for example, the point (location) of the load, the positions of the front rolling bearings 31, the bearing stiffness, the shaft stiffness, and the position of the displacement detecting unit 61 in the axial direction of the compressed gas injection nozzle 62.

It should be noted that the calculation of the load applied to the rotary shaft 21 is not limited to the above-described calculation. For example, a known load is applied to the rotary shaft 21, and the differential pressure detection value generated from the differential pressure sensor 73 of the pressure loss measuring unit 71 is measured for that known load. This process is repeated for a predetermined number of times to prepare a load calculation map that indicates the relationship between the load and the differential pressure detection value, and the map is stored in the storage unit of the arithmetic processing unit PU. If the load calculation map is prepared and stored in the storage unit, the arithmetic processing unit can refer to the load calculation map based on the differential pressure detection value detected by the differential pressure sensor 73 during cutting, and calculate the load directly from the differential pressure detection value. In this way, it is not necessary to convert the differential pressure detection value of the differential pressure sensor 73 to the displacement, and it is possible to easily calculate the load. It should also be noted that instead of using the load calculation map, the equation of the characteristic line (curve) of the load calculation map may be prepared, and the differential pressure detection value of the differential pressure sensor 73 may be substituted in the equation to calculate the load.

It should be noted that since the two or more pairs of the displacement detecting unit 61 and the pressure loss measuring unit 71 are provided as described above, the pressure loss measuring units 71 are connected in parallel to the regulator 83, as shown in FIG. 1.

Next, the operation of the first embodiment will be described.

First, the compressed gas is supplied to the pressure loss measuring unit 71 from the compressed gas supply unit 80. As described above, while the rotary shaft 21 of the spindle apparatus 10 of the machine tool is rotating, the throttling of the throttling element 72 of the pressure loss measuring unit 71 is adjusted to a value that causes the differential pressure detection value detected by the differential pressure sensor 73 to become the preset value, with the radial direction displacement of the rotary shaft 21 being "0."

Then, while the rotary shaft 21 of the spindle apparatus 10 is at rest, the compressor 81 is actuated to regulate the pressure of the compressed gas by the regulator 82. The compressed gas having the regulated (predetermined) value of pressure is supplied to the lubrication oil supply system (not shown) for the front rolling bearing set 31 and the rear rolling bearing 41 in order to start the supply of the lubricant to the front rolling bearing set 31 and the rear rolling bearing 41.

At the same time, or before or after starting the supply of the lubricant, the compressed gas generated from the compressor 81 is regulated by the regulator 83 and supplied to the pressure loss measuring unit 71.

The compressed gas supplied to the pressure loss measuring unit 71 is introduced to the compressed gas supply passage 65 of the housing 11 through the throttling element 72. The compressed gas introduced to the compressed gas supply passage 65 is supplied to the compressed gas injection nozzle 62 from the compressed gas supply passage 64 as the compressed gas is turned 90 degrees radially from the axial direction at the gas connecting portion 66.

The compressed gas supplied to the compressed gas injection nozzle 62 is supplied to the measurement target gap (gap to be measured) **g** between the outer ring spacer 36 and the inner ring spacer 38. As the radial direction displacement of the rotary shaft 21 increases from "0", the measurement target gap **g** decreases, and the pressure loss decreases correspondingly. On the other hand, as the radial direction displacement decreases, the measurement target gap **g** increases, and the pressure loss increases correspondingly. As described above, the gap **g** to be measured becomes smaller when the hollow rotary shaft 21 is rotated at high speed because the rotating members such as the rotary shaft 21 and the inner ring spacer 38 are expanded by the centrifugal force, and the temperature of the rotary shaft 21 becomes higher relative to the housing 11.

Therefore, in the no-load state in which the radial direction displacement of the rotary shaft 21 is "0", the differential pressure detection value detected by the differential pressure sensor 73 becomes the preset value, and the differential pressure detection value that represents that the radial direction displacement of the rotary shaft 21 is "0" is sent to the arithmetic processing unit PU.

Thus, the arithmetic processing unit PU converts the differential pressure detection value, which is received from the differential pressure sensor 73, to the radial direction displacement of the rotary shaft 21, and then multiplies the radial direction displacement by the predetermined shaft stiffness value to calculate the load applied to the rotary shaft 21. The calculated load is sent to the display DP and displayed on the display DP. In this instance, since the radial direction displacement is "0", the load displayed on the display DP is "0".

Suppose that the cutting process starts from this condition, for example. Then, a cutting load is applied to the rotary shaft 21, and a radial direction displacement corresponding to the cutting load occurs in the rotary shaft 21. This radial direction displacement depends on the direction of the cutting load applied to the rotary shaft 21.

Therefore, the pressure loss corresponding to the radial direction displacement occurs in the compressed gas injected from the compressed gas injection nozzle 62 of the displacement detecting units 61 in accordance with the radial direction displacement of the rotary shaft 21. The pressure loss is detected as a differential pressure detection value by the differential pressure sensor 73 of the pressure loss measuring unit 71.

As the detected differential pressure detection value is supplied to the arithmetic processing unit PU, the differential pressure detection value is converted to the radial direction displacement of the rotary shaft 21 by the arithmetic processing unit PU, as described above. Then, the radial direction displacement is multiplied by the preset shaft stiffness value to calculate the load applied to the rotary shaft 21. The value of the calculated load is introduced to the display DP and displayed on the display DP.

In the first embodiment, therefore, the compressed gas is supplied to the displacement detecting unit 61 which includes the outer ring spacer 36 and the inner ring spacer 38 of the front rolling bearing set 31 such that the compressed gas is injected from the compressed gas injection nozzle 62 into the measurement target gap **g** between the outer ring spacer 36 and the inner ring spacer 38. Thus, the pressure loss of the compressed gas corresponding to the radial direction displacement of the rotary shaft 21, i.e., the measurement target gap **g**, is generated. The pressure loss is detected by the differential pressure sensor 73 of the pressure loss measuring unit 71 provided outside the housing 11, and the detected differential pressure detection value is introduced to the arithmetic processing unit PU. Thus, it is possible to calculate the load applied onto the rotary shaft 21.

Therefore, the displacement detecting unit 61 can create the pressure loss corresponding to the radial direction displacement of the rotary shaft 21 by a simple configuration that only includes the outer ring spacer 36, the inner ring spacer 38 facing the outer ring spacer through the measurement target gap **g,** the compressed gas supply passage 64, the gas connecting portion 66 and the compressed gas injection nozzle 62. Since the displacement detecting unit 61 does not require components that operate electrically, it is not necessary to consider the routing and electrical insulation of the wiring.

Further, the pressure loss measuring unit 71 supplies the compressed gas to the displacement detecting unit 61 through the throttling element 72, and measures the pressure loss at the displacement detecting unit 61 by detecting the differential pressure between the pressure downstream of the throttling element 72, i.e., the pressure at the displacement detecting unit 61, and the original pressure of the compressed gas supplied to the pressure loss measuring unit 71. Then, it is possible to convert the detected differential pressure detection value to the radial direction displacement of the rotary shaft 21 and calculate the load applied onto the rotary shaft 21, or to directly calculate the load applied onto the rotary shaft 21 from the differential pressure.

Therefore, if the rotary shaft 21 is rotatably supported by the rolling bearings, the simple configuration can calculate the radial direction displacement of the rotary shaft 21 by utilizing the compressed gas, and calculate the load applied onto the rotary shaft 21.

In the above-described first embodiment, the compressed gas supply passages 64 and 65 extend in the housing 11 in the axial direction of the shaft, but the first embodiment is not limited to such configuration. For example, the gas passage 66b of the gas connecting portion 66 may be elongated (extended) to the outer periphery of the housing such that the gas passage 66b is open (makes an opening) in the outer periphery, and the opening may be connected to the pressure loss measuring unit 71. Alternatively, the compressed gas supply passage 65 may be dispensed with, and the compressed gas supply passage 64 may be extended to the outer periphery of the small outer diameter portion 12a such that the passage 64 is open in the outer periphery of the small outer diameter portion 12a, and the opening may be connected to the pressure loss measuring unit 71.

In the above-described first embodiment, the throttling of the throttling element 72 of the pressure loss measuring unit 71 is adjusted such that the differential pressure detection value detected by the differential pressure sensor 73 becomes the preset value while the rotary shaft 21 of the spindle apparatus 10 of the machine tool is rotating, with the radial direction displacement of the rotary shaft 21 being "0". However, the present invention is not limited to this adjustment. For example, the differential pressure of each pressure loss measuring unit 71 may be adjusted to a certain value by the throttling element 72 of the pressure loss measuring unit 71 while the rotary shaft 21 of the spindle apparatus 10 is at rest without an external load (0 rotation state), and this state is set as displacement 0. Then, as the rotational speed of the rotary shaft 21 changes, the differential pressure of each pressure loss measuring unit 71 changes with the rotational speed of the rotary shaft 21, and the differential pressure set to the displacement 0 is also offset by the same amount. Subsequently, when the rotational speed becomes stable, a trigger signal is given from the outside while no load is being applied to the rotary shaft (in the above-described no-load state), and the value obtained at that time is set to "0". Thus, if the rotation speed of the rotary shaft 21 is constant, it is possible to carry out the measurement in the same manner as the first embodiment, even at different rotational speeds.

### Second Embodiment

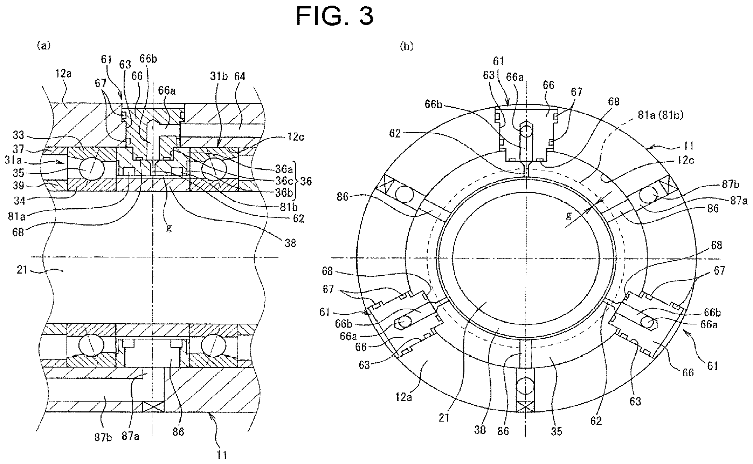

Next, a second embodiment of the bearing device according to the present invention will be described with reference to FIG. 3.

In the second embodiment, the influence of the compressed gas on the front rolling bearing is eliminated.

In the second embodiment, as shown in FIG. 3(a) and FIG. 3(b), three displacement detecting units 61 are provided at equal intervals in the circumferential direction. Gas collecting grooves or gas recovery grooves 81a and 81b, which extend in the circumferential direction, are formed in each displacement detecting unit 61. The gas collecting grooves 81a and 81b are formed in the inner peripheral surface of the outer ring spacer 36, which faces the outer peripheral surface of the inner ring spacer 38 through the measurement target gap **g**. The gas collecting grooves 81a and 81b extend in front of and behind the compressed gas injection nozzle 62 to collect the compressed gas respectively. As shown in a lower half of FIG. 3(a) and FIG. 3(b), cavities 86 are formed in the outer ring spacer 36 at three positions facing the three displacement detecting units 61 across the central axis, respectively, such that the cavities 86 communicate with the gas collecting grooves 81a and 81b. On the other hand, gas discharge passages 87a, which extend radially and communicate with the three cavities 86 respectively, are formed in the small outer diameter portion 12a at three positions facing the cavities 86. In the small outer diameter portion 12a, another gas discharge passages 87b are formed. One end of each gas discharge passage 87b communicates with the associated gas discharge passage 87a, and the other end of each gas discharge passage 87b is open at the front end of the small outer diameter portion. These gas recovery grooves 81a and 81b, the cavities 86, and the gas discharge passages 87a and 87b constitute, in combination, compressed gas discharge passages (compressed gas discharge sections). The gas discharge passages 87a and 87b may be referred to as drain portions for discharging the compressed gas out of the bearing device.

According to the second embodiment, the compressed air injected into the measurement target gap **g** between the outer peripheral surface of the inner ring spacer 38 and the inner peripheral surface of the outer ring spacer 36 from the compressed gas injection nozzle 62 of the displacement detecting unit 61 flows in the measurement target gap **g** and spreads in the front direction, the rear direction and the circumferential direction. The compressed gas spreading in the front and rear directions enters the gas recovery grooves 81a and 81b. The compressed gas flows clockwise and counterclockwise through the gas recovery grooves 81a and 81b in the circumferential direction of FIG. 3(a) and reaches the cavities 86. As the compressed air flows through the gas discharge passages 87a and 87b in the small outer diameter portion 12a from the cavities 86, the compressed air is discharged to the outside from the front end face of the small outer diameter portion 12a.

Therefore, it is possible to prevent the compressed gas, which is injected from the compressed gas injection nozzle 62, from flowing into between the outer ring 33 and the inner ring 34 of the angular contact ball bearing 31a disposed in front of the outer ring spacer 36 and the inner ring spacer 38 and between the outer ring 33 and the inner ring 34 of the angular contact ball bearing 31b disposed behind the outer ring spacer 36 and the inner ring spacer 38. Consequently, the influence of the compressed gas that would otherwise flow into the angular contact ball bearings 31a and 31b, that is, the adverse influence on the oil-air lubrication and the oil-mist lubrication to the angular contact ball bearings can be prevented.

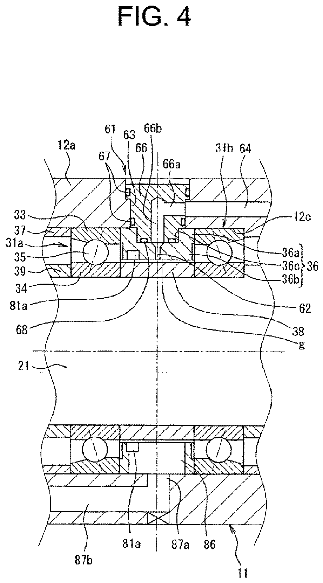

In the above-described second embodiment, the gas recovery grooves 81a and 81b are formed in the outer ring spacer 36 such that the gas recovery grooves 81a extend in front of the compressed gas injection nozzle 62 and the gas recovery grooves 81b extend behind the compressed gas injection nozzle 62, i.e., sandwiching the compressed gas injection nozzle 62 between the gas recovery grooves 81a and 81b, but the second embodiment is not limited to such configuration. As shown in FIG. 4, the gas recovery grooves 81b (or the gas recovery grooves 81a) may be omitted. In this configuration, although the gas recovery efficiency slightly drops, the compressed gas can flow longer through the measurement target gap **g** between the outer ring spacer 36 and the inner ring spacer 38 in the area where the gas recovery groove is omitted. As the compressed gas flows longer, the flow path resistance increases. As a result, most of the compressed gas flows into the gas recovery grooves 81a (or 81b), which have a smaller flow path resistance. Thus, the adverse influence of the compressed gas on the angular contact ball bearings 31a and 31b is small.

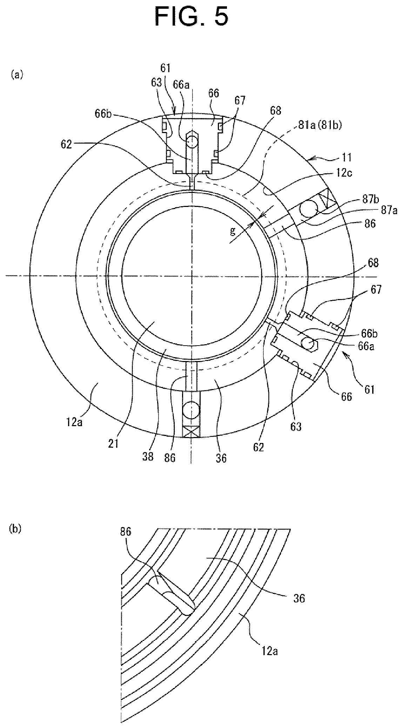

In the second embodiment, the three displacement detecting units 61 are installed, but the second embodiment is not limited to such configuration. As shown in FIG. 5, the number of the displacement detecting units 61 may be two, four, or more. Further, the locations of the cavities 86 formed in the outer ring spacer 36 and the locations of the gas passages 87a and 87b formed in the small outer diameter portion 12a are not limited to those which face the displacement detecting units 61 across the center axis of the shaft. For example, as shown in FIG. 5(a), the cavities 86 and the gas passages 87a and 87b may be provided in the intermediate portions between each two adjacent displacement detecting units 61. In this configuration, because the cavity 86 is formed in the intermediate portion between each two adjacent displacement detecting units 61, it is possible to prevent the compressed gas injected from one of the two adjacent displacement detecting units 61 from adversely affecting the other displacement detecting unit 61. Alternatively, a plurality of cavities 86 may be provided between each two adjacent displacement detecting units 61.

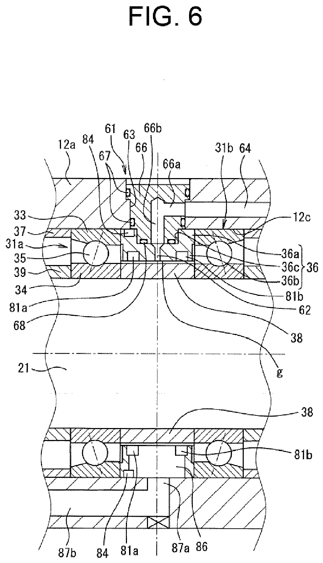

In the above-described second embodiment, a pair of compressed gas discharge passages 87a and 87b are provided for each displacement detecting unit 61, but the second embodiment is not limited to such configuration. As shown in FIG. 6, a communication groove 84 may be formed in the outer peripheral surface of the outer ring spacer 36 such that the communication groove 84 extends in the circumferential direction and allows the cavity portions 86 to communicate with each other in the circumferential direction, and one pair of the compressed gas discharge passages 87a and 87b may be provided for one of the cavities 86. In this configuration, the single pair of compressed gas discharge passages 87a and 87b can recover (collect) the compressed gas injected from all the displacement detecting units 61. Therefore, it is possible to reduce the number of compressed gas discharge passages formed in the housing 11 and reduce the man-hour of the work for preparing (manufacturing) the housing 11.

### Third Embodiment

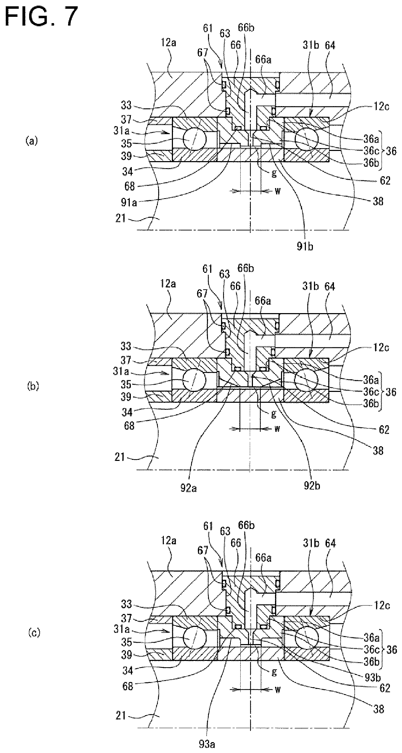

Next, a third embodiment of the bearing device according to the present invention will be described with reference to FIG. 7.

In the third embodiment, the length of the measurement target gap **g** formed between the inner peripheral surface of the outer ring spacer 36 and the outer peripheral surface of the inner ring spacer 38 in the axial direction of the rotary shaft is set to the required minimum length.

That is, in the third embodiment, as shown in FIG. 7(a), the axial length of the measurement target gap **g,** which is formed between the inner peripheral surface of the outer ring spacer 36 and the outer peripheral surface of the inner ring spacer 38 and is open to the compressed gas injection nozzle 62 to receive the compressed gas injected from the compressed gas injection nozzle 62 of the displacement detecting unit 61, is set to the required minimum axial length **w.** The outer ring spacer 36 has shallow grooves 91a and 91b extending in the circumferential direction outside the required axial length **w** of the measurement target gap **g**. The inner peripheral surface of the outer ring spacer 36 has an enlarged diameter in the grooves 91a and 91b. Although not shown, the same gas recovery grooves as the above-described second embodiment are formed in the grooves 91a and 91b.

In the third embodiment, since the axial length of the measurement target gap **g** between the outer ring spacer 36 and the inner ring spacer 38, which is open to the compressed gas injection nozzle 62, is the required minimum axial length **w,** the influences of the viscosity of the compressed gas supplied to the measurement target gap **g** from the compressed gas injection nozzle 62 and the friction of the compressed gas supplied to the measurement target gap **g** are moderated. The time needed for the compressed gas to exit the bearing device is shortened. Therefore, it is possible to improve the responsiveness (speed of the response) to the radial direction displacement of the rotary shaft 21. Furthermore, because the axial length of the measurement target gap **g** is shortened, it is possible to narrow the range that must be processed with high accuracy in order to form the measurement target gap **g** between the outer ring spacer 36 and the inner ring spacer 38. Thus, reduction of the processing cost can be expected. It can also be expected that a more accurate gap is formed.

It should be noted that although the grooves 91a and 91b are formed on both sides of the measurement target gap **g** in the third embodiment, the third embodiment is not limited to such configuration. As shown in FIG. 7(b), conical surfaces 92a and 92b may be formed outside the required measurement target gap **g** such that the inner diameter of the conical surface 92a increases with the distance from the front end of the measurement target gap **g** and the inner diameter of the conical surface 92b increases with the distance from the rear end of the measurement target gap. Alternatively, as shown in FIG. 7(c), grooves 93a and 93b may be formed outside the required measurement target gap **g** such that the diameter of the inner peripheral surface of the outer ring is significantly enlarged. Alternatively, flat portions may be formed outside the required gap **g**, or curved surfaces may be formed outside the required gap **g**. Alternatively, the shape shown in each of FIG. 7(a) to FIG. 7(c) may be combined to other shapes to make a composite shape.

Although the diameter of the inner peripheral surface of the outer ring spacer 36 is enlarged outside the required gap **g** in the third embodiment, the third embodiment is not limited to such configuration. The diameter of the outer peripheral surface of the inner ring spacer 38 may be reduced outside the required gap **g**. Alternatively, the diameter of the inner peripheral surface of the outer ring spacer 36 may be enlarged and the diameter of the outer peripheral surface of the inner ring spacer 38 may be reduced outside the required gap **g**.

### Fourth Embodiment

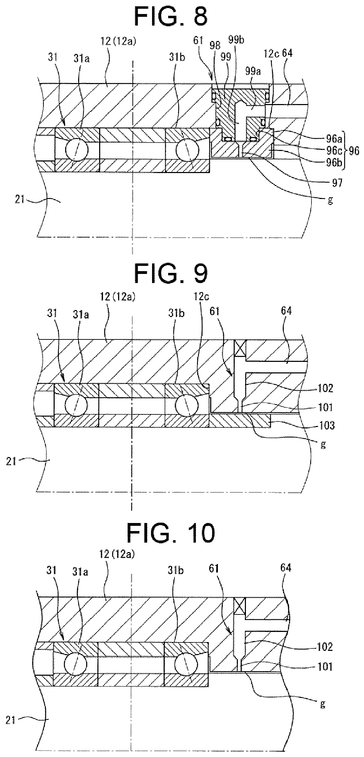

Next, a fourth embodiment of the bearing device according to the present invention will be described with reference to FIG. 8.

In the fourth embodiment, the displacement detecting unit 61 is formed at a position adjacent to the front rolling bearing set 31 in the axial direction, rather than in the spacer of the front rolling bearing set 31 (the spacer between the two front rolling bearings).

That is, in the fourth embodiment, as shown in FIG. 8, the displacement detecting unit 61 is disposed adjacent to the back of the rear angular contact ball bearing 31b of the front rolling bearing set 31.

Therefore, the bearing-receiving stepped-portion 12c formed on the inner peripheral surface of the front cylindrical portion 12 of the housing 11 is extended to behind the angular contact ball bearing 31b of the front rolling bearing set 31.

In the displacement detecting unit 61, an outer ring spacer 96 is disposed at the extension portion of the bearing-receiving stepped-portion 12c. The outer ring spacer 96 has the same shape as the outer ring spacer 36 in the first, second and third embodiments. The inner peripheral surface of the outer ring spacer 96 faces the outer peripheral surface of the rotary shaft 21 to form a measurement target gap **g** on the outer peripheral surface of the rotary shaft 21.

The outer ring spacer 96 includes an outer peripheral ring portion 96a, an inner peripheral ring portion 96b, a recess 96c, and a compressed gas injection nozzle 97. This is similar to the outer ring spacer 36.

Further, an opening 98, which is similar to the opening 63, is formed at a position where the outer ring spacer 96 faces the small outer diameter portion 12a of the housing 11. A gas connecting portion 99 having gas passages 99a and 99b therein, which is similar to the gas connecting portion 66, is provided in the opening 98.

Although not shown, in the fourth embodiment, the gas recovery grooves for recovering the compressed gas and the gas discharge passages for discharging the compressed gas to the outside, which are similar to those described in the second embodiment, are provided.

Since the displacement detecting unit 61 of the fourth embodiment performs the same operation as the first embodiment, it is possible to provide the same working effects and advantages as the first embodiment. In the fourth embodiment, the compressed gas is injected from the outer ring spacer 96 directly to the measurement target gap **g** formed between the rotary shaft 21 and the outer ring spacer, whereas in the first to third embodiments the compressed gas is injected to the measurement target gap **g** formed between the inner ring spacer and the outer ring spacer. Therefore, unlike the first to third embodiments, there is no influence of the centerline misalignment between the rotary shaft 21 and the inner ring spacer in the fourth embodiment. The centerline misalignment is a problem that occurs when using the inner ring spacer which rotates together with the rotary shaft 21. Thus, it is possible to increase the shape accuracy of the measurement target gap **g**.

In the fourth embodiment, the displacement detecting unit 61 includes the outer ring spacer 96 and the gas connecting portion 99 as in the above-described first embodiment, but the fourth embodiment is not limited to such configuration. For example, as shown in FIG. 9, a compressed gas injection nozzle 101 may be formed in the small outer diameter portion 12a of the housing 11, and a gas passage 102 that corresponds to the gas passages 99a and 99b of the gas connecting portion 99 may also be formed in the small outer dimeter portion 12a of the housing 11. Then, the compressed gas injection nozzle 101 may inject the compressed gas into the measurement target gap **g** formed between the inner ring spacer 103 and the small outer diameter portion 12a. The inner ring spacer 103 may be mounted in the outer peripheral surface of the rotary shaft 21 by an intermediate fit or interference fit. In this configuration, it is possible to omit the outer ring spacer 96 and the gas connecting portion 99 of FIG. 8. Thus, it is possible to reduce the components while preventing the occurrence of the circumferential phase error, which would be generated if the gas connecting portion 99 is provided.

Although the inner ring spacer 103 is provided in the fourth embodiment, the fourth embodiment is not limited to such configuration. For example, the inner ring spacer 103 of FIG. 9 may be dispensed with, as shown in FIG. 10. In FIG. 10, the compressed gas from the compressed gas injection nozzle 101 is injected into the measurement target gap **g** formed between the outer peripheral surface of the rotary shaft 21 and the small outer dimeter portion. In this configuration, since the inner ring spacer 103 can be omitted, the components can be further reduced.

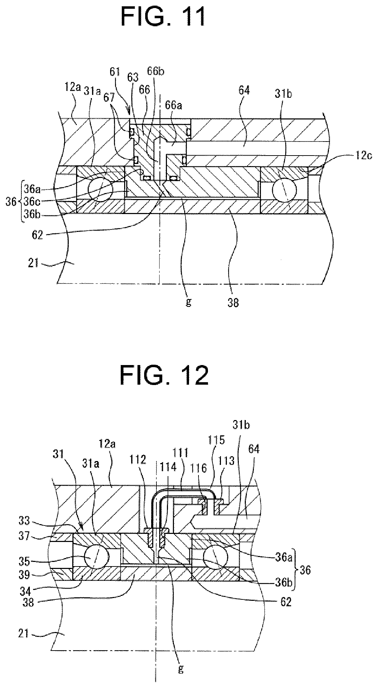

Although the compressed gas injection nozzles 62 and 97 are formed such that the compressed gas injection nozzles 62 and 97 extend in the radial direction in the first to fourth embodiments, the first to fourth embodiments are not limited to such configuration. As shown in FIG. 11, the compressed gas injection nozzle 62 may be formed such that the compressed gas injection nozzle 62 extends toward the rear with a certain inclination. Similarly, although not shown in the drawings, the compressed gas injection nozzle 97 may be formed such that it extends toward the rear with a certain inclination. In this configuration, since the compressed gas injection nozzle 62 (97) extends toward the rear, the distribution of the compressed gas injected from the compressed gas injection nozzle 62 (97) is not uniform in the longitudinal direction (front-rear direction), and the flow rate toward the rear increases. To deal with this, for example, the area of the rear side of the measurement target gap **g** formed between the outer ring spacer 36 and the inner ring spacer 38 is increased in comparison with the area of the front side of the measurement target gap. This increases the flow path resistance in the rear side so that the flow path resistance in the rear side becomes greater than in the front side, and it is possible to equalize the dispersion of the compressed gas in the measurement target gap **g**.

### Fifth Embodiment

Next, a description will be given with reference to FIG. 12 for a fifth embodiment of the bearing device according to the present invention.

The gas connecting portion 66 in the first to fourth embodiments is replaced with a flexible tube in the fifth embodiment.

That is, in the fifth embodiment, as shown in FIG. 12, the gas connecting portion 66 in the first embodiment is omitted. In place of this gas connecting portion, the flexible tube 111 is used, as a gas direction converting unit, to connect the compressed gas injection nozzle 62 of the outer ring spacer 36 to the compressed gas supply passage 64 of the small outer diameter portion 12a of the housing 11. As shown in FIG. 12, the flexible tube 111 has tube fittings 112 and 113 at both ends thereof. The tube fittings 112 and 113 have male threaded portions at free ends thereof, and are attached while maintaining airtightness.

On the other hand, a female threaded portion 114 is formed in the outer ring spacer 36 such that the female threaded portion 114 communicates with the compressed gas injection nozzle 62 and the male threaded portion of the tube fitting 112 is screwed into the female threaded portion.

Further, the small outer diameter portion 12a has an L-shaped space portion 115 therein for receiving the flexible tube 111. A female threaded portion 116 is formed between the space portion 115 and an upper portion of the end of the compressed gas supply passage 64 such that male threaded portion of the tube joint 113 is screwed into the female threaded portion 116.

The tube joint 112 of the flexible tube 111 is screwed into the female screw portion 114 of the outer ring spacer 36, and the other tube joint 113 of the flexible tube 111 is screwed into the female screw portion 116 of the small outer diameter portion 12a. Therefore, the compressed gas supply passage 64 and the compressed gas injection nozzle 62 are connected to each other by the flexible tube 111.

It should be noted that although not shown in the drawings, the gas recovery grooves for recovering the compressed gas and the gas discharge passages for discharging the compressed gas to the outside are formed in the fifth embodiment, as described in the second embodiment.

According to the fifth embodiment, since the flexible tube 111 is employed instead of the gas connection 66, it is possible to easily couple the compressed gas supply passage 64 with the compressed gas injection nozzle 62 without using the gas connection 66 having the complicated structure. Therefore, the tolerance to the circumferential phase error between the housing 11 and the outer ring spacer 36 is increased, and it is possible to alleviate the manufacturing difficulty.

### Sixth Embodiment

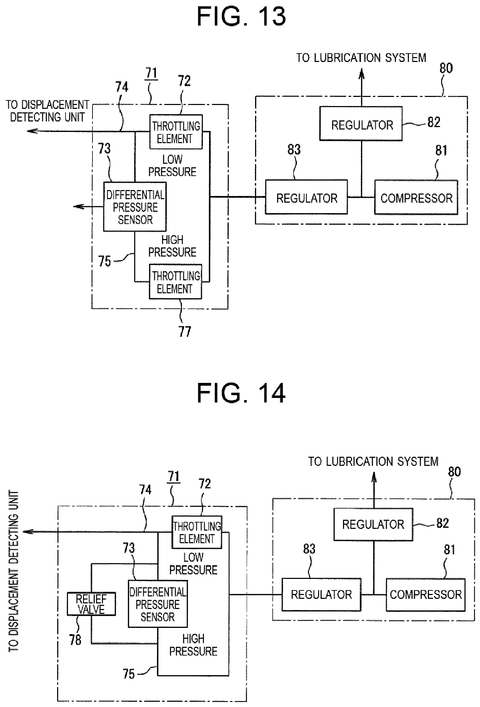

Next, a description will be given with reference to FIG. 13 for a sixth embodiment of the bearing device according to the present invention.

The sixth embodiment intends to prevent excessive differential pressure from being applied to the differential pressure sensor 73 of the pressure loss measuring unit 71.

That is, in the sixth embodiment, as shown in FIG. 13, a throttling element 77 is disposed in a pipe 75 that connects the high-pressure side of the differential pressure sensor 73 of the pressure loss measuring unit 71 of the first embodiment to the regulator 83 in order to adjust the rising time of the compressed gas pressure in accordance with the rising edge of the compressed gas pressure on the downstream side of the throttling element 72.

The operation of the sixth embodiment will be described.

As in the above-described first embodiment, when the high-pressure side of the differential pressure sensor 73 is directly connected to the regulator 83 by the pipe 75, the high-pressure side of the differential pressure sensor 73 is supplied with the compressed air having the fast (early) rising, which is supplied from the regulator 83, as the compressor 81 is activated to start supplying the compressed air having the preset pressure to the pressure loss measuring unit 71 from the regulator 83. Therefore, the high-pressure side of the differential pressure sensor 73 can reach the preset (predetermined) pressure in shorter rise time.

In contrast, if the throttling element 72 is disposed in the pipe 74, the displacement detecting unit 61 is connected to the downstream side of the throttling element 72 through the compressed gas supply passages 65 and 64 in the housing 11. Thus, the distance to the compressed gas injection nozzle 62 of the displacement detecting unit 61 is long, and the distance depends on the structure of the spindle apparatus 10, i.e., the distance is not constant. Therefore, immediately after starting the supply of the compressed gas to the throttling element 72, the rising of the compressed gas at the downstream side of the throttling element 72 is slow. Consequently, it takes time for the compressed gas to rise (increase the pressure) at the low-pressure side of the differential pressure sensor 73.

Therefore, immediately after starting the supply of the compressed gas to the pressure loss measuring unit 71, the differential pressure between the high-pressure side and the low-pressure side of the differential pressure sensor 73 is excessively large and beyond a standard value (specified value). This adversely affects the differential pressure sensor 73.

To deal with this in the sixth embodiment, when the supply of the compressed gas to the pressure loss measuring unit 71 starts, the throttling element 77 is present in the pipe 75 that connects the regulator 83 to the high-pressure side of the differential pressure sensor 73. Therefore, the throttling element 77 can delay the pressure rising speed of the compressed gas to the standard pressure at the high-pressure side of the differential pressure sensor 73. As a result, immediately after starting the supply of the compressed gas to the pressure loss measuring unit 71, it is possible to prevent the differential pressure between the high-pressure side and the low-pressure side of the differential pressure sensor 73 from becoming greater than the standard pressure, i.e., from becoming excessively large.

In this configuration, the rise time (pressure rising speed) of the compressed gas at the high-pressure side of the differential pressure sensor 73 adjusted by the throttling element 77 is not necessarily exactly the same as the rise time of the compressed gas at the throttling element 72. It is satisfactory as long as the differential pressure between the high-pressure side and the low pressure side of the differential pressure sensor 73 falls within a predetermined range immediately after starting the supply of the compressed gas to the pressure loss measuring unit 71 from the regulator 83.

In the sixth embodiment, the throttling element 77 is disposed in the pipe 75 that extends between the high-pressure side of the differential pressure sensor 73 and the regulator 83, and this prevents the differential pressure between the high-pressure side and the low-pressure side of the differential pressure sensor 73 from becoming excessively large, i.e., becoming larger than the standard value. It should be noted, however, that the present invention is not limited to the above-described configuration. As shown in FIG. 14, the throttling element 77 of FIG. 13 may be omitted, and the relief valve 78 may be connected in parallel with the differential pressure sensor 73. In this configuration, when the differential pressure between the high-pressure side and the low-pressure side of the differential pressure sensor 73 exceeds the standard value, the compressed gas of the high-pressure side of the differential pressure sensor 73 is discharged to the atmosphere by the relief valve 78. This prevents the differential pressure between the high-pressure side and the low-pressure side of the differential pressure sensor 73 from exceeding the standard value.

In the foregoing description, the sixth embodiment is applied to the first embodiment. It should be noted that the sixth embodiment may also be applied to any of the second embodiment to the fifth embodiment already described herein. Further, the sixth embodiment may be applied to any of the embodiments described hereafter in the specification.

### Seventh Embodiment

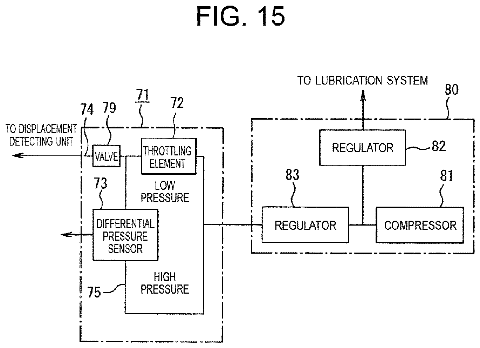

Next, a seventh embodiment of the bearing device according to the present invention will be described with reference to FIG. 15.

The seventh embodiment is designed to alleviate (reduce) an overload on the differential pressure sensor 73, which is caused by the difference between the rise time of the high-pressure side and the rise time of the low-pressure side in the first embodiment.

To this end, the pressure loss measuring unit 71 of the seventh embodiment has a valve 79 disposed in the pipe 74 that connects the opening of the compressed gas supply passage 65 formed in the housing 11 to the regulator 83, as shown in FIG. 15. The valve 79 is disposed in the pipe 74 at a position closer to the compressed gas supply passage 65 (displacement detecting unit 61) than the connecting portion between the pipe 74 and the pipe 75. In other words, the valve 79 is provided in the pipe 74 at a position downstream of the connecting portion between the pipe 74 and the pipe 75.

In the seventh embodiment, the compressed gas is supplied with the valve 79 being closed so that the internal pressure of the pressure loss measuring unit 71 is increased in advance, and then the pressure loss measurement is started by opening the valve 79. This can alleviate the overload on the differential pressure sensor 73 due to the rise time difference between the high-pressure side and the low-pressure side.

In the foregoing description, the seventh embodiment is applied to the first embodiment, but the seventh embodiment can be applied to any of the second embodiment to the sixth embodiment already described herein. Also, the seventh embodiment can be applied to all of the embodiments described hereafter in this specification.

### Eighth Embodiment

The eighth embodiment of the bearing device according to the present invention will be described with reference to FIG. 1, FIG. 2 and FIG. 16. The eighth embodiment is a modification to the first embodiment (FIG. 2). The following description will mainly describe the differences from the first embodiment. In the following description, the same configuration as the first embodiment will be given the same reference numerals and symbols, and the description thereof will be omitted.

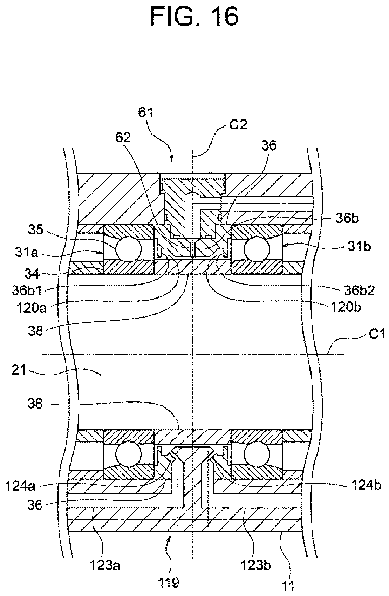

In the eighth embodiment, the following configuration will be described: the compressed gas is supplied to the displacement detecting unit 61 through the compressed gas supply system or line for displacement detection, and the lubrication oil is supplied to the front rolling bearings 31 (31a, 31b) through a different supply line from the compressed gas supply line designed for displacement detection. In this embodiment, the compressed gas is utilized when supplying the lubrication oil. The compressed gas supplied from the compressed gas supply unit 80 shown in FIG. 1 is utilized to supply the lubrication oil to the front rolling bearings 31 by means of oil-air lubrication or oil-mist lubrication. The single-dot chain line C1 in FIG. 16 shows the center axis of the rotary shaft 21. The single-dot chain line C2 perpendicular to the single-dot chain line C1 is a line passing through the center of the nozzle 62.

In this embodiment, it is assumed that the bearing lubrication is carried out by means of oil-air lubrication, but any bearing lubrication is satisfactory as long as the bearing lubrication utilizes the compressed gas and the lubricant, such as oil-air lubrication or oil-mist lubrication. In the following description, the combination of the lubrication oil and the compressed gas for lubrication oil supply is referred to as oil-air. The supply source of the compressed gas used when supplying the lubrication oil to the bearings 31 may be a supply source provided separately from the compressed gas supply unit 80 shown in FIG. 1. To distinguish between the compressed gas used for displacement measurement and the compressed gas used for lubrication oil supply, the compressed gas used for lubrication oil supply may be referred to as a second compressed gas.

The upper side of the single-dot chain line C1 in FIG. 16 shows the displacement detecting unit 61, and the compressed gas supply line for displacement detection. The displacement detecting unit 61 of this embodiment has a substantially the same structure as the displacement detecting unit 61 shown on the upper side of FIG. 2(a) described in the first embodiment. The difference between the first embodiment (FIG. 2(a)) and this embodiment lies in that the outer ring spacer 36 of this embodiment has two air reservoirs (air pools) 120a and 120b. Each of the air reservoirs 120a and 120b is a space (groove) for reducing the pressure of the oil-air. The air reservoir 120a is a recess formed in the outer ring spacer 36 between the compressed gas injection nozzle 62 and the rolling bearing 31a to receive the flow-in of the second compressed gas (oil-air). The air reservoir 120b is a recess formed in the outer ring spacer 36 between the compressed gas injection nozzle 62 and the rolling bearing 31b to receive the flow-in of the second compressed gas (oil-air). In FIG. 16, each of the air reservoir 120a and 120b is shown as a trapezoidal recess formed in the inner peripheral side ring portion 36b of the outer ring spacer 36. Each of the air reservoirs 120a and 120b is an annular groove extending in the circumferential direction of the rotary shaft 21. It is assumed that the two air reservoirs 120a and 120b of this embodiment have a shape symmetrical with respect to the single-dot chain line C2. Between the air reservoir 120a and the front rolling bearing 31a, located is a portion 36b1 of the inner peripheral side ring portion 36b. Between the air reservoir 120b and the front rolling bearing 31b, located is a portion 36b2 of the inner peripheral side ring portion 36b. In this embodiment, since the oil-air entering each of the air reservoirs 120a and 120b is depressurized and decelerated in the air reservoir, the noises due to the supply of the oil-air are reduced by the air reservoirs 120a and 120b. More specifically, the oil-air entering the air reservoirs 120a and 120b reduces its pressure and its speed in the air reservoirs 120a and 120b, respectively, and therefore the wind noises caused by the rolling elements and the rolling element cases of the bearings 31a and 31b are reduced when the oil-air is supplied to the bearings 31a and 31b.

The lower side of the single-dot chain line C1 in FIG. 16 shows a main portion of the lubrication line 119 for supplying the lubrication oil to the front rolling bearings 31. The lubrication line 119 has oil-air supply passages 123a and 123b and oil-air injection nozzles 124a and 124b. The oil-air injection nozzles 124a and 124b are open to the air reservoirs 120a and 120b, respectively. The oil-air is supplied to the lubrication line 119. The lubrication line 119 is a lubricant supply unit for supplying the lubrication oil (lubricant) to the front rolling bearings 31.

The oil-air injection nozzles 124a and 124b are formed at the downstream ends of the oil-air supply passages 123a and 123b, respectively, and the transverse cross-section of each of the oil-air injection nozzles 124a and 124a is smaller than the transverse cross-section of each of the oil-air supply passages 123a and 123b. That is, the oil-air passing through the oil-air supply passages 123a and 123b flows in the oil-air injection nozzles 124a and 124b having a small cross-sectional area, so that the oil-air is throttled.

The oil-air supply passages 123a and 123b extend through the housing 11 and the outer ring spacer 36. More specifically, as shown in FIG. 16, the upstream portions of the oil-air supply passages 123a and 123b extend in the housing 11 in parallel to the single-dot chain line C1. In the vicinity of the single-dot chain line C2, the oil-air supply passages 123a and 123b are turned 90 degrees inward in the radial direction of the rotating shaft 21 and the oil-air supply passages 123a and 123b extend to the oil-air injection nozzles 124a and 124b, respectively. Therefore, the oil-air entering the oil-air supply passages 123a and 123b flows through the oil-air supply passages 123a and 123b, and is supplied to the air reservoirs 120a and 120b from the oil-air injection nozzles 124a and 124b, respectively.

The oil-air entering the air reservoirs 120a and 120b is depressurized in the air reservoirs 120a and 120b, respectively, and then flows in a gap between the portion 36b1 of the inner peripheral side ring portion 36b and the inner ring spacer 38 and a gap between the portion 36b2 of the inner peripheral side ring portion 36b and the inner ring spacer 38 such that the oil-air is supplied to the front rolling bearings 31 (31a, 31b). In this embodiment, since the oil-air entering the air reservoirs 120a and 120b reduces its pressure and speed, the noises due to the oil-air lubrication (wind noises caused by the rolling elements and the rolling element cases of the bearings 31a and 31b) are reduced, as compared with the configuration that does not have the air reservoirs 120a and 120b.

The lubrication line 119 shown on the lower side of the single-dot chain line C1 in FIG. 16 is provided in a phase (location) different from the displacement measuring unit 61 shown on the upper side of the single-dot chain line C1 (the phase is the location or arrangement when viewed from the axial direction of the rotary shaft 21 as shown in FIG. 3(b)).

As shown in FIG. 16, the portion 36b1 of the inner peripheral side ring portion 36b is located between the air reservoir 120a and the front rolling bearing 31a. Thus, the lubrication oil entering the air reservoir 120a is not directly sprayed onto the front rolling bearing 31a. After the oil-air is depressurized and decelerated by the air reservoir 120a provided in the outer ring spacer 36, the oil-air passes through the gap between the outer ring spacer 36 and the inner ring spacer 38, and is supplied to the front rolling bearing 31a. Similarly, since the portion 36b2 of the inner peripheral side ring portion 36b is located between the air reservoir 120b and the front rolling bearing 31b, the oil-air (lubrication oil) that has entered the air reservoir 120b is not directly sprayed onto the front rolling bearing 31b. After the oil-air is depressurized and decelerated by the air reservoir 120b provided in the outer ring spacer 36, the oil-air passes through the gap between the outer ring spacer 36 and the inner ring spacer 38, and is supplied to the front rolling bearing 31b.

### Modifications

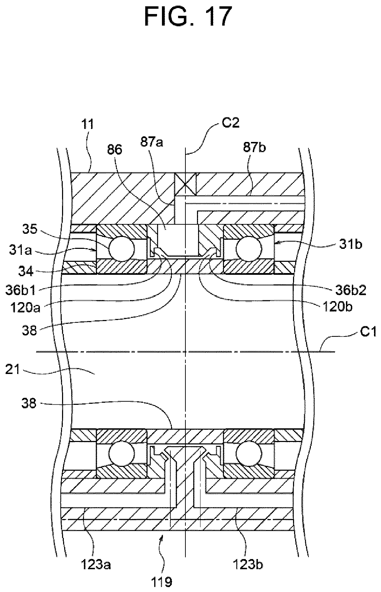

It should be noted that the configuration shown in FIG. 16 may include the gas recovery grooves 81a and 81b and the gas discharge passages 87a and 87b, which are described in connection with FIG. 3. This configuration will be described as a modification to the eighth embodiment with reference to FIG. 17. Each of the gas recovery grooves 81a and 81b is a groove in which the compressed gas supplied for displacement detection flows.

In FIG. 17, the gas discharge passages 87a and 87b are shown on the upper side of the single-dot chain line C1, and the main portions of the lubricant system 119 are shown on the lower side of the single-dot chain line C1. The lower side of the single-dot chain line C1 in FIG. 17 is the same as the lower side of the single-dot chain line C1 in FIG. 16.

As shown in FIG. 17, the gas discharge passages 87a and 87b are formed in the housing 11. The gas discharge passage 87b communicates with the cavity (cavities) 86. The cavity 86 of this modification is small on the right side of the single-dot chain line C2, as compared with the cavity 86 of FIG. 3. Further, in this modification, the cavity 86 is in communication with the air reservoir 120a, and not in communication with the air reservoir 120b. Incidentally, the annular gas recovery groove 81a described in connection with FIG. 3 (second embodiment) is changed to the air reservoir 120a in the configuration of FIG. 17, and the gas recovery groove 81b is changed to the air reservoir 120b. That is, the air reservoirs 120a and 120b function as the gas recovery grooves 81a and 81b, respectively. Thus, when the air reservoir 120a and the gas recovery groove 81a are the same groove, this groove is referred to as a common groove. Also, when the air reservoir 120b and the gas recovery groove 81b are the same groove, this groove is referred to as another common groove. The compressed gas supplied for displacement detection flows in the common grooves, and the oil-air (second compressed gas) also flows in the common grooves.

If the bearing devices uses the air reservoir 120a as the gas recovery groove 81a and uses the air reservoir 120b as the gas recovery groove 81b, the space in the axial direction of the rotary shaft 21 can be effectively used, as compared with a configuration of providing the air reservoirs 120a and 120b and the gas recovery grooves 81a and 81b separately.

The compressed gas injected from the compressed gas injection nozzle 62 flows through the air reservoirs 120a and 120b and reaches the bearings 31a and 31b. As a result, some of the compressed gas (for displacement detection), which would otherwise be simply discharged to the outside through the gas discharge passages 87a and 87b, is caused to flow into the front rolling bearings 31a and 31b, and the pressure of the compressed gas supplied for displacement detection becomes the pressure that pushes the oil-air (lubrication oil) toward the front rolling bearings 31a and 31b. That is, the compressed gas used for displacement detection can be reused as auxiliary air to assist the lubrication oil supply to the front rolling bearings 31a and 31b.

It should be noted that although the common grooves are provided on both sides of the single-dot chain line C2 in FIG. 17, the common groove may be provided only on the right side of the single-dot chain line C2 or may be provided only on the left side of the single-dot chain line C2. For example, the common groove may be provided only on the right side of the single-dot chain line C2, and the gas recovery groove may be provided on the left side of the single-dot chain line C2.

If the axial dimension of the outer ring spacer 36 is large, the air reservoirs 120a and 120b and the gas recovery grooves 81a and 81b may be formed separately in the outer ring spacer 36. In this configuration, the air reservoirs 120a and 120b and the gas recovery grooves 81a and 81b may be formed separately in the outer ring spacer 36 on only the right side (or on only the left side) of the single-dot chain line C2 or both sides of the single-dot chain line C2.

### Ninth Embodiment

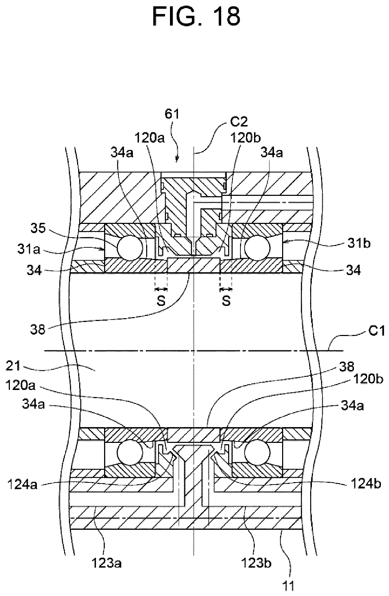

A ninth embodiment of the bearing device according to the present invention will be described with reference to FIG. 18.

Similar to the eighth embodiment, the ninth embodiment supplies the compressed gas to the displacement detecting unit 61, and uses the compressed gas to supply the lubrication oil (oil-air) to the front rolling bearings 31 (31a, 31b). The following description will mainly describe the differences from the eighth embodiment. In the following description, the same configuration as the eighth embodiment will be given the same reference numerals and symbols, and the description thereof will be omitted.

The difference between the eighth embodiment and the ninth embodiment lies in that the inner ring 34 of the front rolling bearing 31 (31a, 31b) extends beyond the end face of the outer ring 33 in the axial direction (direction of the single-dot chain line C1). More specifically, the inner ring 34 of the front rolling bearing 31 (31a, 31b) of the ninth embodiment is elongated toward the single-dot chain line C2 by a predetermined amount S, as compared with the inner ring 34 of FIG. 16 (the dimension of the inner ring 34 of the ninth embodiment is larger than the inner ring of FIG. 16 in the rotation axis direction by the predetermined amount S). Further, the outer diameter of the inner ring 34 (the diameter of the outer peripheral surface 34a) gradually decreases toward the single-dot chain line C2 from the ball 35. For example, on the left side of the single-dot chain line C2 in FIG. 18, the outer peripheral surface 34a of the inner ring 34 inclines to the lower right, as it goes from the ball 35 toward the single-dot chain line C2. Since the dimension of the inner ring 34 in the direction of the single-dot chain line C1 is increased by the predetermined amount S, the dimension of the inner ring spacer 38 is correspondingly reduced. The structure on the lower side of the single-dot chain line C1 in FIG. 18 is the same as the structure on the lower side of the single-dot chain line C1 in FIG. 16. It should be noted that the configuration in which the outer diameter of the inner ring 34 decreases as it goes from the ball 35 toward the single-dot chain line C2 may be expressed as a configuration in which the outer diameter of the inner ring 34 increases as it goes toward the ball 35.

Because the outer peripheral surface 34a of the inner race 34 inclines in the direction of the air reservoirs 120a and 120b in this manner, the oil-air supplied from the oil-air injection nozzles 124a and 124b toward the air reservoirs 120a and 120b flows toward the outer peripheral surface 34a of the inner race 34, as is obvious from the view on the lower side of the single-dot chain line C1 in FIG. 18. When the oil-air reaches the outer peripheral surface 34a of the inner ring 34, the lubrication oil contained in the oil-air is caused to move toward the bearings 31a and 31b along the outer peripheral surface 34a of the inner ring 34 by the centrifugal force generated upon the rotations of the rotary shaft 21, and the lubrication oil is eventually supplied to the balls 35. Therefore, according to this embodiment, it is possible to supply the lubrication oil to the balls 35 more efficiently than the configuration shown in FIG. 16. Because the air reservoirs 120a and 120b are also provided in this embodiment, the oil-air entering the air reservoirs 120a and 120b is depressurized and decelerated in the air reservoirs, and noises produced by the oil-air lubrication (wind noises produced by the rolling elements and the rolling element cases of the bearings 31a and 31b) are reduced by the air reservoirs 120a and 120b.

### Modifications

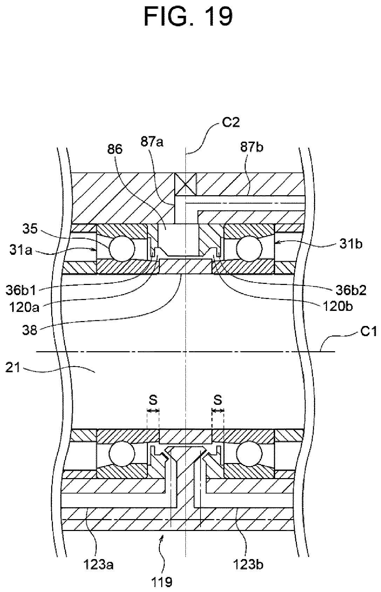

The configuration shown in FIG. 18 may include the air reservoirs 120a and 120b, the cavities 86 and the gas discharge passages 87a and 87b, as described in connection with FIG. 17. This configuration will be described with reference to FIG. 19 as a modification to the ninth embodiment.

In FIG. 19, the gas discharge passages 87a and 87b are shown on the upper side of the single-dot chain line C1, and the main portion of the lubrication line 119 is shown on the lower side of the single-dot chain line C1. The lubrication line 119 shown on the lower side of the single-dot chain line C1 in FIG. 19 is the same as the lubrication line 119 on the lower side of the single-dot chain line C1 in FIG. 17.

As shown above the single-dot chain line C1 in FIG. 19, the gas discharge passages 87a and 87b are formed in the housing 11. The gas discharge passage 87b communicates with the cavity 86. The cavity 86 of this modification is smaller on the right side of the single-dot chain line C2, as compared with the cavity 86 of FIG. 3. Further, in this modification, the cavity 86 is in communication with the air reservoir 120a, and not in communication with the air reservoir 120b. The air reservoir 120a of FIG. 19 is the gas recovery groove 81a of FIG. 3, and the air reservoir 120b of FIG. 19 is the gas recovery groove 81b of FIG. 3. Thus, when the air reservoir 120a and the gas recovery groove 81a are the same groove, the groove is referred to as a common groove. Similarly, when the air reservoir 120b and the gas recovery groove 81b are the same groove, the groove is referred to as another common groove. The compressed gas supplied for displacement detection flows in each of the common grooves, and the oil-air (second compressed gas) also flows in each of the common grooves.

Similar to FIG. 18, the inner ring 34 of this modification is elongated toward the single-dot chain line C2 by the predetermined amount S. Further, the outer diameter of the inner ring 34 (the diameter of the outer peripheral surface 34a) decreases toward the single-dot chain line C2 from the ball 35.

When the outer peripheral surface 34a of the inner race 34 inclines in the direction of each of the air reservoirs 120a and 120b in this manner, the oil-air supplied from the oil-air injection nozzles 124a and 124b toward the air reservoirs 120a and 120b flows toward the outer peripheral surface 34a of the inner race 34, as is obvious from the view under the single-dot chain line C1 in FIG. 19. When the oil-air reaches the outer peripheral surface 34a of the inner ring 34, the lubrication oil contained in the oil-air is caused to move along the outer peripheral surface 34a of the inner ring 34 by the centrifugal force generated by the rotations of the rotary shaft 21, and the lubrication oil is eventually supplied to the balls 35. Therefore, it is possible to supply the lubrication oil to the balls 35 efficiently. Because the air reservoirs 120a and 120b are provided in this modified embodiment, the noises produced by the oil-air lubrication are reduced by the air reservoirs 120a and 120b.

Further, it is possible to effectively (efficiently) use the space in the axial direction of the rotary shaft 21, as compared with a configuration in which the air reservoirs 120a and 120b and the gas recovery grooves 81a and 81b are provided separately (independently).

The compressed gas injected from the compressed gas injection nozzle 62 flows through the air reservoirs 120a and 120b and reaches the bearings 31a and 31b. As a result, the compressed gas (for displacement detection) which would otherwise be simply discharged to the outside through the gas discharge passages 87a and 87b flows in the front rolling bearings 31a, and the pressure of the compressed gas supplied for displacement detection becomes the pressure that pushes the oil-air (lubrication oil) toward the front rolling bearings 31a and 31b. In other words, the compressed gas used for displacement detection can be reused as auxiliary air to assist (facilitate) the lubrication oil supply to the bearings 31a and 31b.

Similar to the configuration shown in FIG. 17, it should be noted that although the common grooves are provided on both sides of the single-dot chain line C2 in Fig. 19, the common groove may be provided only on the right side of the single-dot chain line C2 or only on the left side of the single-dot chain line C2. For example, the common groove may be provided only on the right side of the single-dot chain line C2, and the gas recovery groove may be provided on the left side of the single-dot chain line C2.

If the axial dimension of the outer ring spacer 36 is large, the air reservoirs 120a and 120b and the gas recovery grooves 81a and 81b may be formed separately in the outer ring spacer 36. In this configuration, the air reservoirs 120a and 120b and the gas recovery grooves 81a and 81b may be formed separately in the outer ring spacer 36 on the right side (or left side) of the single-dot chain line C2 or both sides of the single-dot chain line C2.

It should be noted that in FIG. 16 to FIG. 19, the arrangement phases of the displacement measuring unit 61 and the oil-air injection nozzles 124a and 124b (arrangement when viewed from the axial direction of the rotary shaft 21 as shown in FIG. 3(b)) are not particularly limited. However, it is preferred that the arrangement phases of the oil-air injection nozzles 124a and 124b do not overlap with the arrangement phases of the displacement measuring unit 61 and the cavities 86.

It is also preferred that the arrangement phases of the oil-air injection nozzles 124a and 124b are spaced ten degrees or more from the arrangement phase of the displacement measuring unit 61 when viewed in the circumferential direction about the axis of the rotary shaft 21. This is preferred in order to effectively reduce the pressure of the oil-air from the oil-air injection nozzles 124a and 124b and the pressure of the compressed gas of the displacement measuring unit 61.

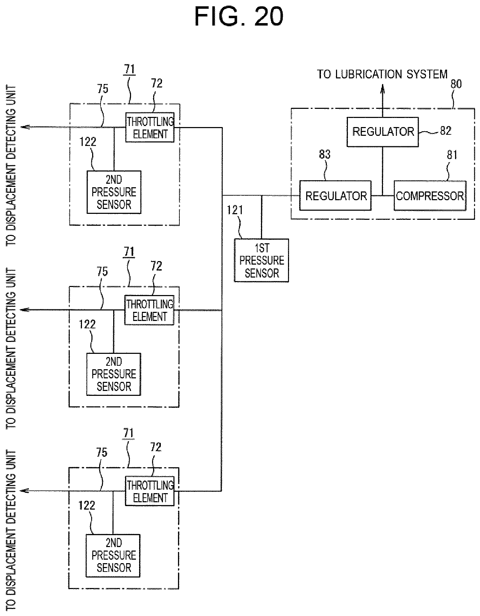

In the first to ninth embodiments, the configurations have been described in which the differential pressure sensor 73 is provided in the pressure loss measuring unit 71, but the present invention is not limited thereto. As shown in FIG. 20, the differential pressure sensor 73 may be omitted. In place of the differential pressure sensor, a first pressure sensor 121 may be provided on the output side of the regulator 83 and a second pressure sensor 122 for detecting the pressure at a position downstream of the throttling element 72 may be provided. In this configuration, it is possible to detect the differential pressure by subtracting the detected pressure of the second pressure sensor 122 of each pressure loss measuring unit from the original pressure of the compressed gas output from the regulator 83 detected by the first pressure sensor 121. As such a configuration is employed, the protection system of the differential pressure sensor 73 as in the above-described sixth embodiment is not required and the absolute pressure or gauge pressure of the compressed gas can be measured by the first pressure sensor 121 and the second pressure sensor 122. Thus, when the supply source pressure (original pressure) changes due to a certain trouble, it is possible to detect the change in the supply source pressure.

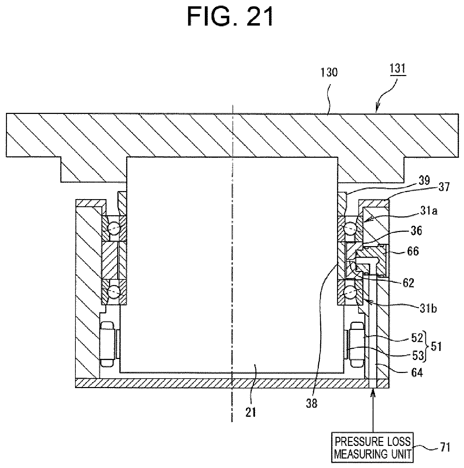

The first to ninth embodiments have described the configurations of applying the bearing devices according to the present invention to the spindle apparatus 10 of the machine tool, but use of the bearing devices of the present invention is not limited thereto. The bearing devices of the present invention may be applied to a rotary table device 131 of the machine tool in which a rotary table 130 is disposed on the upper end of the rotary shaft 21 as shown in FIG. 21. Those portions, components and parts of the configuration in FIG. 21 which correspond to the portions, components and parts of the configuration in FIG. 1, are denoted by the same reference numerals, and the detailed description thereof will be omitted.

Although specific embodiments have been described above, it is possible to make appropriate omission, substitutions and changes to the above-described embodiments within the scope of the appended claims.

### REFERENCE NUMERALS AND SYMBOLS

10... Spindle apparatus of a machine tool, 11... Housing, 21... Rotating shaft, 31... Front rolling bearing, 31a, 31b... Angular contact ball bearing, 33... Outer ring, 34... Inner ring, 35... Ball, 36... Outer ring spacer, 38... Inner ring spacer, 41... Rear rolling bearing, 51... Drive motor, 52... Stator, 53... Rotor, 61... Displacement detecting unit, PU... Arithmetic processing unit, 62... Compressed gas injection nozzle, **g...** Gap to be measured, 64, 65... Compressed gas supply passage, 66... Gas connecting portion, 71... Pressure loss measuring unit, 72... Throttling element, 73... Differential pressure sensor, 74, 75... Pipe, 77... Throttling element, 78... Relief valve, 79... Valve, 80... Compressed gas supply unit, 81... Compressor, 82, 83... Regulator, 81a, 81b... Gas recovery groove, 86... Cavity, 87a, 87b... Gas discharge passage, 88... Communicating groove, 91a, 91b... Groove, 92a, 92b... Conical surface, 93a, 93b... Groove, 96... Outer ring spacer, 97... Compressed gas injection nozzle, 99... Gas connecting portion, 101... Compressed gas injection nozzle, 102... Gas passage, 103... Inner ring spacer, 111... Flexible tube, 112, 113... Tube fitting, 114, 116... Female thread, 121... First pressure sensor, 122... Second pressure sensor, 120a, 120b... Air reservoir, 124a, 124b... Oil-air injection nozzle, 130... Rotating table, 131... Rotating table device for the machine tool

## Claims

1. A bearing device configured to support a rotary member (21) to a fixed member (11) via a rolling bearing (31a, 31b) and comprising a compressed gas injection nozzle (62) configured to inject compressed gas into a gap (g) between the rotary member (21) and the fixed member (11) in the vicinity of the rolling bearing (31a, 31b),
**characterized by**
a displacement measuring unit (60) configured to measure a radial direction displacement of the rotary member (21) by using the compressed gas supplied into the gap (g) to be measured,
the displacement measuring unit (60) including a plurality of pairs of a displacement detecting unit (61) and a pressure loss measuring unit (71), and an arithmetic processing unit (PU),
the plurality of pairs of the displacement detecting unit (61) and the pressure loss measuring unit (71) being arranged in a circumferential direction,
the displacement detecting unit (61) having the compressed gas injection nozzle (62),
the pressure loss measuring unit (71) being configured to measure a pressure loss of the compressed gas supplied to the displacement detecting unit (61),
the arithmetic processing unit (PU) being configured to calculate the radial direction displacement by converting the measured pressure loss to the radial direction displacement,
wherein
each of the displacement detecting units (61) has a gas recovery groove (81a, 81b) configured to recover the compressed gas injected into the gap (g) to be measured from the compressed gas injection nozzle (62), the gas recovery groove (81a, 81b) being formed on one side or both sides with respect to an axis (C2) of the compressed gas injection nozzle (62), and
the arithmetic processing unit (PU) is configured to calculate a load exerted on the rotary member (21) based on measurement results of the pressure loss measuring units (71).

2. The bearing device according to claim 1, wherein
the plurality of pairs of said displacement detecting unit (61) and said pressure loss measuring unit (71) are arranged at different positions in a circumferential direction of the rotary member (21) such that the two pairs do not face each other across a center axis (C1) of the rotary member (21).

3. The bearing device according to claim 1, wherein
the displacement measuring unit (61) includes three or more pairs of said displacement detecting unit (61) and said pressure loss measuring unit (71) arranged at different positions in a circumferential direction of the rotary member (21).

4. The bearing device according to any one of claims 1 to 3, wherein
the displacement detecting unit (61) further includes a compressed gas supply passage (64, 65) configured to supply the compressed gas to the compressed gas injection nozzle (62).

5. The bearing device according to any one of claims 1 to 4, wherein
the displacement detecting unit (61) further includes a compressed gas discharge unit (87a, 87b) configured to discharge the compressed gas recovered in the gas recovery groove to an outside of the bearing device.

6. The bearing device according to any one of claims 1 to 5, wherein
an outer ring spacer (36) and an inner ring spacer (38) are disposed in contact with the rolling bearing (31a, 31b) between the rotary member (21) and the fixed member (11), and
the compressed gas injection nozzle (62) of the displacement detecting unit (61) is formed in the outer ring spacer (36), and the gap (g) to be measured is formed between the outer ring spacer (36) and the inner ring spacer (38).

7. The bearing device according to any one of claims 1 to 5, wherein
an outer ring spacer (36) is disposed in contact with the rolling bearing (31a, 31b) between the rotary member and the fixed member (11), and
the compressed gas injection nozzle (62) of the displacement detecting unit (61) is formed in the outer ring spacer (36), and the gap (g) to be measured is formed between the outer ring spacer (36) and the rotary member (21).

8. The bearing device according to claim 4, wherein
a gas direction converting unit (66) configured to convert a direction of the compressed gas is provided between the compressed gas injection nozzle (62) and the compressed gas supply passage (64, 65).

9. The bearing device according to claim 8, wherein
the gas direction converting unit (66) includes a gas connecting portion (66) in which a gas passage (66a, 66b) configured to change the direction of the compressed gas is formed.

10. The bearing device according to claim 8, wherein
the gas direction converting unit (66) includes a flexible tube (111) having tube fittings (112, 113) at both ends thereof.

11. The bearing device according to any one of claims 1 to 5, wherein
the compressed gas injection nozzle (62) of the displacement detecting unit (61) is formed in the vicinity of the rolling bearing (31a, 31b), and the gap (g) to be measure is formed between an inner peripheral surface of the fixed member (11) and an outer peripheral surface of the rotary member (21) near the compressed gas injection nozzle (62).

12. The bearing device according to any one of claims 1 to 11, wherein
the pressure loss measuring unit (71) includes a throttling element (72) disposed in a compressed gas supply path (74) configured to supply the compressed gas from a compressed gas supply unit (80) to the displacement detecting unit (61), and the pressure loss measuring unit (71) measures the pressure loss based on a differential pressure between the pressure of the compressed gas between the throttling element (72) and the displacement detecting unit (61) and the pressure of the compressed gas supplied from the compressed gas supply unit (80).

13. The bearing device according to claim 12, wherein
the pressure loss measuring unit (71) includes a differential pressure sensor (73) configured to measure the differential pressure, and a low-pressure side of the differential pressure sensor (73) is connected between the throttling element (72) and the displacement detecting unit (61) and a high-pressure side of the differential pressure sensor (73) is connected to the compressed gas supply unit (80).

14. The bearing device according to claim 13, wherein
the pressure loss measuring unit (71) includes a valve (78) disposed between the throttling element (72) and the displacement detecting unit (61), and
the valve is provided at a position closer to the displacement detecting unit (61) than a connecting portion, to which the low-pressure side of the differential pressure sensor (73) is connected, and configured to moderate an overload exerted on the differential pressure sensor (73) due to a rise time difference between the high-pressure side and the low-pressure side.

15. The bearing device according to claim 13, wherein
a throttling element (77) configured to adjust a rise of pressure is provided between the high-pressure side of the differential pressure sensor (73) and the compressed gas supply unit (80).

16. The bearing device according to claim 12, wherein
the pressure loss measuring unit (71) includes a first pressure sensor (121) configured to detect the pressure of the compressed gas supplied from the compressed gas supply unit (80) and a second pressure sensor (122) configured to detect the pressure of the compressed gas between and the throttling element (72) and the displacement detecting unit (61), and the pressure loss measuring unit (71) detects the differential pressure by subtracting a pressure detection value of the second pressure sensor (122) from a pressure detection value of the first pressure sensor (121).

17. The bearing device according to any one of claims 12 to 16, wherein
the arithmetic processing unit (PU) is configured to calculate an amount of the load exerted on the rotary member (21) based on the differential pressure detected by the pressure loss measuring unit (71).

18. The bearing device according to claim 6 or 7 further comprising
a lubricant supply unit (123a, 123b) configured to supply a lubricant to the rolling bearing (31a, 31b) together with a second compressed gas different from the compressed gas supplied for displacement measurement,
wherein
at least one recess (120a, 120b) in which the second compressed gas flows is formed in the outer ring spacer (36) between the compressed gas injection nozzle (62) and the rolling bearing (31a, 31b).

19. The bearing device according to claim 18, wherein
each of the at least one recess (120a, 120b) is a pressure reducing portion configured to reduce a pressure of the second compressed gas.

20. The bearing device according to claim 18 or 19, wherein
each of the at least one recess (120a, 120b) serves as the gas recovery groove (81a, 81b).

21. The bearing device according to any one of claims 18 to 20, wherein
the lubricant supply unit (123a, 123b) has a lubricant injection nozzle (124a, 124b) which opens to the at least one recess (120a, 120b) formed in the outer ring spacer (36) and injects the lubricant to the at least one recess (120a, 120b) together with the second compressed gas.

22. The bearing device according to any one of claims 18 to 21, wherein
the bearing device includes a cavity (86) formed in the outer ring spacer (36) and connected to a compressed gas discharge portion (87a, 87b) configured to discharge the compressed gas supplied for displacement measurement to an outside of the bearing device, and,
when the at least one recess includes two recesses (120a, 120b) formed on both sides of the compressed gas injection nozzle (62), the cavity communicates with at least one of the two recesses (120a, 120b) formed on the both sides of the compressed gas injection nozzle (62).

23. The bearing device according to any one of claims 18 to 22, wherein
the rolling bearing (31a, 31b) includes an inner ring (34), an outer ring (33), and a plurality of rolling elements (35) rotatably disposed between the inner ring (34) and the outer ring (33), and
the inner ring has a larger dimension (S) than the outer ring (33) in an axial direction of the rotary member (21), and the inner ring (34) has a portion (34a) whose diameter increases toward the rolling elements (35).

24. A machine tool spindle apparatus (10) comprising a bearing device according to any one of claims 1 to 23, wherein
the machine tool spindle apparatus (10) is configured to use the bearing device to rotatably support a main shaft (21) as the rotary member (21), and measure a load exerted on the main shaft (21).

## Patentansprüche

1. Lagervorrichtung, die konfiguriert ist, ein Drehelement (21) über ein Wälzlager (31a, 31b) auf einem festen Element (11) zu lagern, und die eine Druckgas-Injektionsdüse (62) aufweist, die konfiguriert ist, Druckgas in einen Spalt (g) zwischen dem Drehelement (21) und dem festen Element (11) in der Nähe des Wälzlagers (31a, 31b) zu injizieren, **gekennzeichnet durch**
eine Verschiebungsmesseinheit (60), die konfiguriert ist, eine Verschiebung in radialer Richtung des Drehelements (21) unter Verwendung des Druckgases zu messen, das in den zu messenden Spalt (g) zugeführt wird,
wobei die Verschiebungsmesseinheit (60) mehrere Paare einer Verschiebungs-Erfassungseinheit (61) und einer Druckverlust-Messeinheit (71) und eine arithmetische Verarbeitungseinheit (PU) enthält,
wobei die mehreren Paare der Verschiebungs-Erfassungseinheit (61) und der Druckverlust-Messeinheit (71) in einer Umfangsrichtung angeordnet sind, wobei die Verschiebungs-Erfassungseinheit (61) die Druckgas-Injektionsdüse (62) aufweist,
wobei die Druckverlust-Messeinheit (71) konfiguriert ist, einen Druckverlust des der Verschiebungs-Erfassungseinheit (61) zugeführten Druckgases zu messen,
wobei die arithmetische Verarbeitungseinheit (PU) konfiguriert ist, die Verschiebung in radialer Richtung durch Umwandeln des gemessenen Druckverlusts in die die Verschiebung in radialer Richtung zu berechnen, wobei jede der Verschiebungs-Erfassungseinheiten (61) eine Gasrückgewinnungsnut (81a, 81b) aufweist, die konfiguriert ist, das von der Druckgas-Injektionsdüse (62) in den zu messenden Spalt (g) injizierte Druckgas zurückzugewinnen, wobei die Gasrückgewinnungsnut (81a, 81b) auf einer Seite oder auf beiden Seiten in Bezug auf eine Achse (C2) der Druckgas-Injektionsdüse (62) ausgebildet ist, und
die arithmetische Verarbeitungseinheit (PU) konfiguriert ist, eine auf das Drehelement (21) ausgeübte Last basierend auf Messergebnissen der Druckverlust-Messeinheiten (71) zu berechnen.

2. Lagervorrichtung nach Anspruch 1, wobei
die mehreren Paare der Verschiebungs-Erfassungseinheit (61) und der Druckverlust-Messeinheit (71) an unterschiedlichen Positionen in einer Umfangsrichtung des Drehelements (21) angeordnet sind, so dass die beiden Paare einander nicht über eine Mittelachse (C1) des Drehelements (21) gegenüberliegen.

3. Lagervorrichtung nach Anspruch 1, wobei
die Verschiebungsmesseinheit (61) drei oder mehr Paare der Verschiebungs-Erfassungseinheit (61) und der Druckverlust-Messeinheit (71) enthält, die an unterschiedlichen Positionen in einer Umfangsrichtung des Drehelements (21) angeordnet sind.

4. Lagervorrichtung nach einem der Ansprüche 1 bis 3, wobei die Verschiebungs-Erfassungseinheit (61) ferner einen Druckgaszufuhrkanal (64, 65) aufweist, der konfiguriert ist, das Druckgas der Druckgas-Injektionsdüse (62) zuzuführen.

5. Lagervorrichtung nach einem der Ansprüche 1 bis 4, wobei die Verschiebungs-Erfassungseinheit (61) ferner eine Druckgasabgabeeinheit (87a, 87b) aufweist, die konfiguriert ist, das in der Gasrückgewinnungsnut zurückgewonnene Druckgas zum Äußeren der Lagervorrichtung abzugeben.

6. Lagervorrichtung nach einem der Ansprüche 1 bis 5, wobei ein Außenring-Abstandshalter (36) und ein Innenring-Abstandshalter (38) in Kontakt mit dem Wälzlager (31a, 31b) zwischen dem Drehelement (21) und dem festen Element (11) angeordnet sind, und
die Druckgas-Injektionsdüse (62) der Verschiebungs-Erfassungseinheit (61) in dem Außenring-Abstandshalter (36) ausgebildet ist und der zu messende Spalt (g) zwischen dem Außenring-Abstandshalter (36) und dem Innenring-Abstandshalter (38) ausgebildet ist.

7. Lagervorrichtung nach einem der Ansprüche 1 bis 5, wobei ein Außenring-Abstandhalter (36) in Kontakt mit dem Wälzlager (31a, 31b) zwischen dem Drehelement und dem festen Element (11) angeordnet ist, und
die Druckgas-Injektionsdüse (62) der Verschiebungs-Erfassungseinheit (61) im Außenring-Abstandhalter (36) ausgebildet ist und der zu messende Spalt (g) zwischen dem Außenring-Abstandhalter (36) und dem Drehelement (21) ausgebildet ist.

8. Lagervorrichtung nach Anspruch 4, wobei
eine Gasrichtungs-Umwandlungseinheit (66), die konfiguriert ist, eine Richtung des Druckgases umzuwandeln, zwischen der Druckgas-Injektionsdüse (62) und dem Druckgaszufuhrkanal (64, 65) vorgesehen ist.

9. Lagervorrichtung nach Anspruch 8, wobei
die Gasrichtungs-Umwandlungseinheit (66) einen Gasverbindungsabschnitt (66) enthält, in dem ein Gaskanal (66a, 66b) ausgebildet ist, der zum Ändern der Richtung des Druckgases konfiguriert ist.

10. Lagervorrichtung nach Anspruch 8, wobei
die Gasrichtungs-Umwandlungseinheit (66) einen flexiblen Schlauch (111) mit Schlauchanschlüssen (112, 113) an seinen beiden Enden aufweist.

11. Lagervorrichtung nach einem der Ansprüche 1 bis 5, wobei die Druckgas-Injektionsdüse (62) der Verschiebungs-Erfassungseinheit (61) in der Nähe des Wälzlagers (31a, 31b) ausgebildet ist und der zu messende Spalt (g) zwischen einer Innenumfangsfläche des festen Elements (11) und einer Außenumfangsfläche des Drehelements (21) nahe der Druckgas-Injektionsdüse (62) ausgebildet ist.

12. Lagervorrichtung nach einem der Ansprüche 1 bis 11, wobei die Druckverlust-Messeinheit (71) ein Drosselelement (72) enthält, das in einem Druckgas-Zuführungsweg (74) angeordnet ist, der konfiguriert ist, das Druckgas von einer Druckgas-Zuführungseinheit (80) der Verschiebungs-Erfassungseinheit (61) zuzuführen, und die Druckverlust-Messeinheit (71) den Druckverlust basierend auf einem Differenzdruck zwischen dem Druck des Druckgases zwischen dem Drosselelement (72) und der Verschiebungs-Erfassungseinheit (61) und dem Druck des Druckgases misst, das von der Druckgas-Zuführungseinheit (80) zugeführt wird.

13. Lagervorrichtung nach Anspruch 12, wobei
die Druckverlust-Messeinheit (71) einen Differenzdrucksensor (73) aufweist, der zur Messung des Differenzdrucks konfiguriert ist, und eine Niederdruckseite des Differenzdrucksensors (73) zwischen dem Drosselelement (72) und der Verschiebungs-Erfassungseinheit (61) angeschlossen ist und eine Hochdruckseite des Differenzdrucksensors (73) an die Druckgas-Zuführungseinheit (80) angeschlossen ist.

14. Lagervorrichtung nach Anspruch 13, wobei
die Druckverlust-Messeinheit (71) ein Ventil (78) aufweist, das zwischen dem Drosselelement (72) und der Verschiebungs-Erfassungseinheit (61) angeordnet ist, und
das Ventil an einer Position vorgesehen ist, die näher an der Verschiebungs-Erfassungseinheit (61) liegt als ein Verbindungsabschnitt, mit dem die Niederdruckseite des Differenzdrucksensors (73) verbunden ist, und konfiguriert ist, eine auf den Differenzdrucksensor (73) ausgeübte Überlast aufgrund einer Anstiegszeitdifferenz zwischen der Hochdruckseite und der Niederdruckseite zu mildern.

15. Lagervorrichtung nach Anspruch 13, wobei
ein Drosselelement (77), das zum Einstellen eines Druckanstiegs konfiguriert ist, zwischen der Hochdruckseite des Differenzdrucksensors (73) und der Druckgas-Zuführungseinheit (80) vorgesehen ist.

16. Lagervorrichtung nach Anspruch 12, wobei
die Druckverlust-Messeinheit (71) einen ersten Drucksensor (121), der konfiguriert ist, den Druck des von der Druckgas-Zuführungseinheit (80) zugeführten Druckgases zu erfassen, und einen zweiten Drucksensor (122) enthält, der konfiguriert ist, den Druck des Druckgases zwischen dem Drosselelement (72) und der Verschiebungs-Erfassungseinheit (61) zu erfassen, und die Druckverlust-Messeinheit (71) den Differenzdruck erfasst, indem sie einen Druckerfassungswert des zweiten Drucksensors (122) von einem Druckerfassungswert des ersten Drucksensors (121) subtrahiert.

17. Lagervorrichtung nach einem der Ansprüche 12 bis 16, wobei die arithmetische Verarbeitungseinheit (PU) konfiguriert ist, einen Betrag der auf das Drehelement (21) ausgeübten Last basierend auf dem von der Druckverlust-Messeinheit (71) erfassten Differenzdruck zu berechnen.

18. Lagervorrichtung nach Anspruch 6 oder 7, die ferner aufweist:
eine Schmiermittel-Zuführungseinheit (123a, 123b), die konfiguriert ist, dem Wälzlager (31a, 31b) ein Schmiermittel zusammen mit einem zweiten Druckgas zuzuführen, das sich von dem für die Verschiebungsmessung zugeführten Druckgas unterscheidet, wobei
mindestens eine Aussparung(120a, 120b), in der das zweite Druckgas strömt, im Außenring-Abstandshalter (36) zwischen der Druckgas-Injektionsdüse (62) und dem Wälzlager (31a, 31b) ausgebildet ist.

19. Lagervorrichtung nach Anspruch 18, wobei
jede der mindestens einen Aussparung (120a, 120b) ein Druckminderungsabschnitt ist, der konfiguriert ist, einen Druck des zweiten Druckgases zu reduzieren.

20. Lagervorrichtung nach Anspruch 18 oder 19, wobei
jede der mindestens einen Aussparung (120a, 120b) als die Gasrückgewinnungsnut (81a, 81b) dient.

21. Lagervorrichtung nach einem der Ansprüche 18 bis 20, wobei die Schmiermittel-Zuführungseinheit (123a, 123b) eine Schmiermittel-Einspritzdüse (124a, 124b) aufweist, die in die mindestens eine Aussparung (120a, 120b) mündet, die im Außenring-Abstandshalter (36) ausgebildet ist, und das Schmiermittel zusammen mit dem zweiten Druckgas in die mindestens eine Aussparung (120a, 120b) einspritzt.

22. Lagervorrichtung nach einem der Ansprüche 18 bis 21, wobei die Lagervorrichtung einen Hohlraum (86) aufweist, der im Außenring-Abstandshalter (36) ausgebildet und mit einem Druckgas-Abgabeabschnitt (87a, 87b) verbunden ist, der konfiguriert ist, das für die Verschiebungsmessung zugeführte Druckgas zum Äußeren der Lagervorrichtung abzugeben, und,
wenn die mindestens eine Aussparung zwei Aussparungen (120a, 120b) umfasst, die auf beiden Seiten der Druckgas-Injektionsdüse (62) ausgebildet sind, der Hohlraum mit mindestens einer der beiden Aussparungen (120a, 120b) in Verbindung steht, die auf beiden Seiten der Druckgas-Injektionsdüse (62) ausgebildet sind.

23. Lagervorrichtung nach einem der Ansprüche 18 bis 22, wobei das Wälzlager (31a, 31b) einen Innenring (34), einen Außenring (33) und mehrere Wälzkörper (35) aufweist, die drehbar zwischen dem Innenring (34) und dem Außenring (33) angeordnet sind, und
der Innenring eine größere Abmessung (S) als der Außenring (33) in einer axialen Richtung des Drehelements (21) aufweist, und der Innenring (34) einen Abschnitt (34a) aufweist, dessen Durchmesser zu den Wälzelementen (35) zunimmt.

24. Werkzeugmaschinen-Spindelvorrichtung (10), die eine Lagervorrichtung nach einem der Ansprüche 1 bis 23 aufweist, wobei
die Werkzeugmaschinen-Spindelvorrichtung (10) konfiguriert ist, die Lagervorrichtung zu verwenden, um eine Hauptwelle (21) als das Drehelement (21) drehbar zu lagern und eine auf die Hauptwelle (21) ausgeübte Last zu messen.

## Revendications

1. Dispositif de palier prévu pour supporter un élément rotatif (21) sur un élément fixe (11) au moyen d'un roulement (31a, 31b) et comprenant une buse d'injection de gaz comprimé (62) prévue pour injecter du gaz comprimé dans un interstice (g) entre l'élément rotatif (21) et l'élément fixe (11) à proximité du roulement (31a, 31b),
**caractérisé par**
une unité de mesure de déplacement (60) prévue pour mesurer un déplacement dans la direction radiale de l'élément rotatif (21) au moyen du gaz comprimé injecté dans l'interstice (g) à mesurer,
ladite unité de mesure de déplacement (60) comprenant une pluralité de paires constituées d'une unité de détection de déplacement (61) et d'une unité de mesure de perte de pression (71), ainsi qu'une unité de traitement arithmétique (PU),
la pluralité de paires de ladite unité de détection de déplacement (61) et de ladite unité de mesure de perte de pression (71) étant disposées dans la direction circonférentielle,
l'unité de détection de déplacement (61) étant pourvue de la buse d'injection de gaz comprimé (62),
l'unité de mesure de perte de pression (71) étant prévue pour mesurer une perte de pression du gaz comprimé refoulé vers l'unité de détection de déplacement (61),
l'unité de traitement arithmétique (PU) étant prévue pour calculer le déplacement dans la direction radiale par conversion de la perte de pression mesurée en déplacement dans la direction radiale, où
chacune des unités de détection de déplacement (61) présente une rainure de récupération de gaz (81a, 81b) prévue pour récupérer le gaz comprimé injecté dans l'interstice (g) à mesurer par la buse d'injection de gaz comprimé (62), ladite rainure de récupération de gaz (81a, 81b) étant formée sur un côté ou sur les deux côtés par rapport à un axe (C2) de la buse d'injection de gaz comprimé (62), et où
l'unité de traitement arithmétique (PU) est prévue pour calculer une charge exercée sur l'élément rotatif (21) sur la base des résultats de mesure des unités de mesure de perte de pression (71).

2. Dispositif de palier selon la revendication 1, où
la pluralité de paires de ladite unité de détection de déplacement (61) et de ladite unité de mesure de perte de pression (71) sont disposées à différents emplacements dans la direction circonférentielle de l'élément rotatif (21), de sorte que les deux paires ne sont pas en vis-à-vis transversalement à un axe central (C1) de l'élément rotatif (21) .

3. Dispositif de palier selon la revendication 1, où
l'unité de mesure de déplacement (61) comprend trois paires ou plus de ladite unité de détection de déplacement (61) et de ladite unité de mesure de perte de pression (71) disposées à différents emplacements dans la direction circonférentielle de l'élément rotatif (21).

4. Dispositif de palier selon l'une des revendications 1 à 3, où
l'unité de détection de déplacement (61) comprend en outre un passage d'alimentation en gaz comprimé (64, 65) prévu pour alimenter en gaz comprimé la buse d'injection de gaz comprimé (62).

5. Dispositif de palier selon l'une des revendications 1 à 4, où
l'unité de détection de déplacement (61) comprend en outre une unité d'évacuation de gaz comprimé (87a, 87b) prévue pour évacuer le gaz comprimé récupéré dans la rainure de récupération de gaz à l'extérieur du dispositif de palier.

6. Dispositif de palier selon l'une des revendications 1 à 5, où
un anneau d'espacement extérieur (36) et un anneau d'espacement intérieur (38) sont disposés en contact avec le roulement (31a, 31b) entre l'élément rotatif (21) et l'élément fixe (11), et
la buse d'injection de gaz comprimé (62) de l'unité de détection de déplacement (61) est formée dans l'anneau d'espacement extérieur (36), et l'interstice (g) à mesurer est formé entre l'anneau d'espacement extérieur (36) et l'anneau d'espacement intérieur (38).

7. Dispositif de palier selon l'une des revendications 1 à 5, où
un anneau d'espacement extérieur (36) est disposé en contact avec le roulement (31a, 31b) entre l'élément rotatif et l'élément fixe (11), et
la buse d'injection de gaz comprimé (62) de l'unité de détection de déplacement (61) est formée dans l'anneau d'espacement extérieur (36), et l'interstice (g) à mesurer est formé entre l'anneau d'espacement extérieur (36) et l'élément rotatif (21).

8. Dispositif de palier selon la revendication 4, où une unité de conversion de direction du gaz (66) prévue pour convertir la direction du gaz comprimé est disposée entre la buse d'injection de gaz comprimé (62) et le passage d'alimentation en gaz comprimé (64, 65).

9. Dispositif de palier selon la revendication 8, où l'unité de conversion de direction du gaz (66) comprend une partie de connexion de gaz (66) où est formé un passage de gaz (66a, 66b) prévu pour changer la direction du gaz comprimé.

10. Dispositif de palier selon la revendication 8, où l'unité de conversion de direction du gaz (66) comprend un tube flexible (111) ayant des raccords de tube (112, 113) à ses deux extrémités.

11. Dispositif de palier selon l'une des revendications 1 à 5, où
la buse d'injection de gaz comprimé (62) de l'unité de détection de déplacement (61) est formée à proximité du roulement (31a, 31b), et l'interstice (g) à mesurer est formé entre une surface périphérique intérieure de l'élément fixe (11) et une surface périphérique extérieure de l'élément rotatif (21) à proximité de la buse d'injection de gaz comprimé (62).

12. Dispositif de palier selon l'une des revendications 1 à 11, où
l'unité de mesure de perte de pression (71) comprend un élément d'étranglement (72) disposé sur un chemin d'alimentation en gaz comprimé (74) prévu pour refouler le gaz comprimé d'une unité d'alimentation en gaz comprimé (80) vers l'unité de détection de déplacement (61), et
l'unité de mesure de perte de pression (71) mesure la perte de pression sur la base d'un différentiel de pression entre la pression du gaz comprimé entre l'élément d'étranglement (72) et l'unité de détection de déplacement (61) et la pression du gaz comprimé fourni par l'unité d'alimentation en gaz comprimé (80).

13. Dispositif de palier selon la revendication 12, où
l'unité de mesure de perte de pression (71) comprend un capteur de différentiel de pression (73) prévu pour mesurer le différentiel de pression, et où un côté basse pression du capteur de différentiel de pression (73) est connecté entre l'élément d'étranglement (72) et l'unité de détection de déplacement (61), et un côté haute pression du capteur de différentiel de pression (73) est connecté à l'unité d'alimentation en gaz comprimé (80).

14. Dispositif de palier selon la revendication 13, où l'unité de mesure de perte de pression (71) comprend une soupape (78) disposée entre l'élément d'étranglement (72) et l'unité de détection de déplacement (61), et où la soupape est disposée à un emplacement plus proche de l'unité de détection de déplacement (61) qu'une partie de connexion à laquelle le côté basse pression du capteur de différentiel de pression (73) est connecté, et est prévue pour modérer une surcharge exercée sur le capteur de différentiel de pression (73) suite à une différence de temps de montée entre le côté haute pression et le côté basse pression.

15. Dispositif de palier selon la revendication 13, où
un élément d'étranglement (77) prévu pour ajuster une montée en pression est prévu entre le côté haute pression du capteur de différentiel de pression (73) et l'unité d'alimentation en gaz comprimé (80).

16. Dispositif de palier selon la revendication 12, où l'unité de mesure de perte de pression (71) comprend un premier capteur de pression (121) prévu pour détecter la pression du gaz comprimé refoulé par l'unité d'alimentation en gaz comprimé (80) et un deuxième capteur de pression (122) prévu pour détecter la pression du gaz comprimé entre l'élément d'étranglement (72) et l'unité de détection de déplacement (61), et où l'unité de mesure de perte de pression (71) détecte le différentiel de pression en soustrayant une valeur de détection de pression du deuxième capteur de pression (122) d'une valeur de détection de pression du premier capteur de pression (121).

17. Dispositif de palier selon l'une des revendications 12 à 16, où
l'unité de traitement arithmétique (PU) est prévue pour calculer une valeur de la charge exercée sur l'élément rotatif (21) sur la base du différentiel de pression détecté par l'unité de mesure de perte de pression (71).

18. Dispositif de palier selon la revendication 6 ou la revendication 7, comprenant en outre
une unité d'alimentation en lubrifiant (123a, 123b) prévue pour alimenter le roulement (31a, 31b) en lubrifiant avec un deuxième gaz comprimé différent du gaz comprimé refoulé pour la mesure de déplacement,
où
au moins un renfoncement (120a, 120b) où circule le deuxième gaz comprimé est formé dans l'anneau d'espacement extérieur (36) entre la buse d'injection de gaz comprimé (62) et le roulement (31a, 31b).

19. Dispositif de palier selon la revendication 18, où
chacun desdits au moins un renfoncement (120a, 120b) est une partie de réduction de pression prévue pour réduire la pression du deuxième gaz comprimé.

20. Dispositif de palier selon la revendication 18 ou la revendication 19, où
chacun desdits au moins un renfoncement (120a, 120b) sert de rainure de récupération de gaz (81a, 81b).

21. Dispositif de palier selon l'une des revendications 18 à 20, où
l'unité d'alimentation en lubrifiant (123a, 123b) comporte une buse d'injection de lubrifiant (124a, 124b) débouchant sur ledit au moins un renfoncement (120a, 120b) formé dans l'anneau d'espacement extérieur (36) et injectant le lubrifiant avec le deuxième gaz comprimé dans ledit au moins un renfoncement (120a, 120b).

22. Dispositif de palier selon l'une des revendications 18 à 21, où
le dispositif de palier comprend une cavité (86) formée dans l'anneau d'espacement extérieur (36) et reliée à une partie d'évacuation de gaz comprimé (87a, 87b) prévue pour évacuer le gaz comprimé refoulé pour la mesure de
déplacement à l'extérieur du dispositif de palier, et où, lorsque ledit au moins un renfoncement comprend deux renfoncements (120a, 120b) formés de part et d'autre de la buse d'injection de gaz comprimé (62), la cavité communique avec au moins un des deux renfoncements (120a, 120b) formés de part et d'autre de la buse d'injection de gaz comprimé (62) .

23. Dispositif de palier selon l'une des revendications 18 à 22, où
le roulement (31a, 31b) comprend une bague intérieure (34), une bague extérieure (33) et une pluralité d'éléments de roulement (35) disposés de manière rotative entre la bague intérieure (34) et la bague extérieure (33), et où la bague intérieure est de dimension (S) supérieure à la bague extérieure (33) dans une direction axiale de l'élément rotatif (21), et la bague intérieure (34) a une partie (34a) dont le diamètre s'accroît dans la direction des éléments de roulement (35).

24. Appareil à broche de machine-outil (10) comprenant un dispositif de palier selon l'une des revendications 1 à 23, où
l'appareil à broche de machine-outil (10) est prévu pour utiliser le dispositif de palier pour supporter de manière rotative un arbre principal (21) en tant qu'élément rotatif (21), et pour mesurer une charge exercée sur l'arbre principal (21).
